# EUROPEAN PATENT APPLICATION

(11) **EP 0 561 000 A1**
(43) Date of publication of application: **22.09.1993**
(21) Application number: 93906341.8
(22) Date of filing: 09.10.1992
(51) Int. Cl.: G11B 13/04, G11B 23/30

(54) **DATA RECORDING MEDIUM, ITS PRODUCTION, AND DATA RECORDING/REPRODUCTION APPARATUS**

(30) Priority: 09.10.1991 JP 262030/91; 09.10.1991 JP 262031/91; 09.10.1991 JP 262032/91
(71) Applicant: SEIKO EPSON CORPORATION, Shinjuku-ku Tokyo 160 (JP)
(72) Inventor: FUJIMORI, Minoru, Nagano 392 (JP); FUJIWARA, Yasuhide, Nagano 392 (JP); NEBASHI, Satoshi, Nagano 392 (JP); TSUJI, Masuo, Nagano 392 (JP); NOMURA, Hiroaki, Nagano 392 (JP); KAMIJO, Noriyuki, Nagano 392 (JP); SHIMODA, Tatsuya, Nagano 392 (JP)
(74) Representative: Hoffmann, Eckart, Dipl.-Ing.
(86) International application number: PCT/JP92/01312
(87) International publication number: WO 93/07617

(57) **Abstract**

A data recording medium having data recording portions of different recording systems in one data recording medium, its production and a data recording/reproduction apparatus. The medium includes an optical recording portion which has a large recording capacity but in which data cannot be re-written data, and a magnetic recording portion which has a small recording capacity but in which data can easily be re-written. The optical recording portion is used as a ROM while the magnetic recording portion is used as a RAM, and a re-writable data recording medium having a large data capacity can be accomplished. An optical recording portion for read-out only by an optical recording system and a magnetic recording portion capable of both recording and reproduction by a magnetic recording system are disposed on one data recording medium. A data recording/reproduction apparatus for this data recording medium includes a system controller (21) and a CLV servo mechanism (217) as a control unit of an optical head (212). This control unit instructs a disc rotation mechanism (22) on the basis of data reproduced from the optical recording portion of the data recording medium (10) at the time of recording and reproduction of the data for the magnetic recording portion, and controls the magnetic head (230). Magnetic recording can cope with both single-track type and multiple-track type, and can prevent interference between the optical head and the magnetic head. Accordingly, the present invention can cope with the data recording medium having both a large recording capacity of the optical recording portion and easiness of the re-write operation of the magnetic recording portion.

## Description

### Technical Field

The present invention relates to an information storage medium, a method of fabricating this medium, and a drive unit for such a medium and, more particularly, to an information storage medium having information storage portions recorded by different methods and also to a drive unit such as a disk drive capable of writing and reading information to and from such an information storage medium.

### Background Art

Read-only optical storage media such as CD-ROMs are typical information storage media. Since these read-only optical storage media have large storage capacities, they are used in game machines and in other applications. However, it is difficult to rewrite the contents of the read-only optical storage media and, therefore, it is impossible to record intermediate results of processing. A photoelectromagnetic storage disk has been devised as a rewritable disk having a large storage capacity. Unfortunately, this disk is very expensive. In addition, this disk is not compatible with conventional optical storage disks. Therefore, the present situation is that none of these information storage media can fully meet the needs.

### Disclosure of the Invention

It is an object of the present invention to provide an information storage medium having plural information storage portions recorded by different methods such that only the merits of these different methods are exploited and that their drawbacks are mutually compensated for. This object is achieved by an information storage medium having both a read-only optical storage portion and a rewritable magnetic storage portion. The read-only optical storage portion is written optically. The magnetic storage portion can be written and read magnetically. The optical storage portion has a large storage capacity but it is difficult to rewrite its contents. The magnetic storage portion has a small storage capacity but can be easily rewritten. These two kinds of storage portions are incorporated into one information storage medium. The optical storage portion is used as a ROM, while the magnetic storage portion is employed as a RAM. In this way, an information storage medium which has a large storage capacity and can be rewritten can be accomplished.

A first type of information storage medium according to the invention comprises an optical storage disk having an optical storage portion, along with a magnetic storage portion formed on the surface of the disk. Preferably, the optical storage portion has a region storing certain data indicating that the disk contains a magnetic storage portion. Also it is desired that the magnetic storage portion and the optical storage portion be formed on opposite sides of an information storage medium. Where the information storage medium has an outer case enclosing the body of the medium having both magnetic storage portion and optical storage portion, openings formed in the case to permit heads to have access to the two kinds of storage portions are preferably spaced from each other circumferentially of the body of the medium, because magnetic flux leaking from the optical head less affects the magnetic head.

The information storage medium constructed in this way is fabricated by a method according to the invention. In this method, a magnetic storage medium having a desired form is formed from plastic film. A binder is applied to the surface of the film together with a magnetic material. An optical storage disk is bonded to the rear surface of the magnetic storage medium film via an adhesive, thus completing a magnetic storage portion. Alternatively, the optical storage disk is bonded to the rear surface of the magnetic storage medium film, using an adhesive sheet having an adhesive applied to its both sides. This fabrication method is based on the optical storage disk and so the prior art method of fabricating optical storage disks can be used directly. Therefore, these fabrication steps are easy to perform. Furthermore, the function of the optical storage disks is not impaired. In the fabrication method using these steps, a magnetic storage medium film may be cut from the plastic film to which the binder is applied together with the magnetic material. In this case, the magnetic storage medium film can be square in shape. Instead of the above steps, the magnetic material can be applied to the front surface of the optical storage disk along with the binder by spin coating. Then, the binder is dried and fixed to form the magnetic storage portion. In another method, a resin which hardens when exposed to light is applied by spin coating to the front surface of a reflecting film to protect it, the reflecting film being formed on an optical storage disk. A magnetic material is dispersed in the protective resin. The protective resin is irradiated with light to harden it, thus forming a magnetic storage portion. In any fabrication method, the title of the optical storage disk is preferably printed before the magnetic storage portion is formed, because the formation of the magnetic storage portion creates a step.

A second type of information storage medium according to the invention comprises a first disk forming an optical storage portion and a second disk forming a magnetic storage portion. One of the disks is received in a first casing provided with an opening permitting a head to access the disk. The other disk is mounted on the side of a shutter that opens and closes the opening. In this structure, the other disk is accommodated in a second casing mounted on the side of the shutter. The second casing is provided with an opening enabling a head to have access to the disk. Preferably, the openings formed in the two casings extend in different directions. Also, the first casing is equipped with an opening for replacement of the heads. This opening is opened by moving the shutter.

Disk drives for use with the aforementioned first type of information storage medium of the information storage media of these configurations often use an optical information reading control mechanism of the constant line velocity (CLV) system. That is, when information is read from the optical storage portion, the rotational speed of the information storage medium is controlled according to the information recorded in the optical storage portion in such a way that the scanning line speed of reading light is maintained constant, irrespective of the track position. In this case, when information is written to or read from the magnetic storage portion, the most suitable method involves maintaining the optical head at a given position and controlling the rotation of the information storage medium while reading information from the optical storage portion, in order to hold the rotational speed of the medium constant. Of course, the magnetic storage portion may have a plurality of tracks to increase the storage capacity of the magnetic storage portion. The method of controlling the rotational speed is not limited to the above-described method, i.e., the rotational speed is maintained constant. It is also possible to change the position of the optical head whenever the magnetic head shifts. In the magnetic storage portion, the storage density may be varied from track to track.

The above-described disk drive controls the rotational speed of the information storage medium according to information recorded optically. Therefore, even if data is optically recorded on the information storage medium such that the capacity per track is kept constant, then the optically recorded data can be retrieved without difficulty. Also, data can be written and read out magnetically without difficulty similarly to the foregoing method.

In order to prevent the heads or the information storage medium from getting damaged, a decision means for making a decision as to whether the loaded information storage medium has a magnetic storage portion and a control means are provided. The control means prevents the magnetic head from touching the medium according to the result of the decision made by the decision means, provided that the loaded medium has no magnetic storage portion. The decision means makes a decision as to whether the loaded information storage medium has a magnetic storage portion, based on information read from a storage region storing certain data indicating that the optical storage portion of the loaded medium has a magnetic storage portion. The magnetic head writes and reads information to and from the magnetic storage portion. The optical head reads information from the optical storage portion. These two heads are mounted on opposite sides of the loaded information storage medium. Preferably, the disk drive is equipped with a magnetic head-moving mechanism which keeps the magnetic head away from the information storage medium when the magnetic head does not gain access to the medium. The moving mechanism brings the magnetic head into contact with the medium only when the magnetic head accesses the medium. In order to prevent interference between components and to facilitate loading the information storage medium, it is desired to provide a magnetic head support mechanism which elevates the magnetic head while interlocking with a cover that moves upward when the information storage medium is loaded. In this case, the magnetic head is preferably mounted to a securing member via a spring member. A mechanism for moving the optical head is mounted to this securing member. Where the magnetic head for writing and reading information to and from the magnetic storage portion and the optical head for reading information from the optical storage portion are spaced from each other circumferentially of the medium, the magnetic flux leaking from the optical head less affects the magnetic head.

A drive unit for writing and reading information to and from the aforementioned second type of information storage medium comprises an optical reader unit for reading information from the first disk, a magnetic drive unit for magnetically writing and reading information to and from the second disk, and a disk separation-and-loading means. This separation-and-loading means separates the first and second disks from the loaded information storage medium, loads the first disk into the optical reader unit, and loads the second disk into the magnetic drive unit.

Preferably, the disk separation-and-loading means comprises a means for placing the disks in position along the plane of the face of the loaded information storage medium and means for placing the two disks in position in the directions of their thicknesses.

Preferably, the optical reader unit and the magnetic drive unit are disposed adjacent to each other, and the axes of rotation of the spindle motors of these two units extend parallel and in the same direction. The optical reader unit and the magnetic drive unit are preferably disposed adjacent to each other and mounted on the same chassis. In this case, the chassis has shock-absorbing means to absorb shocks applied to both units.

In a drive unit according to the invention, disk drive means for use with an information storage medium have preferably connecting means for flexibly connecting the drive unit with the optical storage disk in the first type of information storage medium. If the connecting means act to place the disks in position along the plane of the face of loaded medium, then the means for placing the disks in position in the directions of their thicknesses preferably use magnetic attraction means making use of a magnetic attractive force.

Other objects and features of the invention will appear in the course of the description thereof which follows.

### BRIEF DESCRIPTION OF THE DRAWINGS

- Fig. 1(a): is a cross-sectional view of an information storage medium forming Example 1 of the invention;
- Fig. 1(b): is a plan view of the information storage medium shown in Fig. 1(a);
- Fig. 1(c): is a bottom view of the information storage medium shown in Fig. 1(a);
- Fig. 2, (a)-(e),: are cross-sectional views of the information storage medium of Example 1, for illustrating successive steps for fabricating the medium;
- Fig. 3, (a)-(d),: are cross-sectional views of an information storage medium forming Example 2 of the invention, for illustrating successive steps for fabricating the medium;
- Fig. 4: is a cross-sectional view of an information storage medium of Example 3 of the invention;
- Fig. 5,: (a)-(c), are cross-sectional views of an information storage medium forming Example 4 of the invention, for illustrating successive steps for fabricating the medium;
- Fig. 6,: (a)-(c), are cross-sectional views illustrating successive steps of a method of fabricating a modification of the information storage medium of Example 4;
- Fig. 7: is a block diagram of a drive unit forming Example 5 of the invention;
- Fig. 8: is a diagram illustrating successive operations of the drive unit shown in Fig. 7 to make a magnetic recording;
- Fig. 9(a): is a cross-sectional view of the mechanical portion of a drive unit forming Example 7 of the invention, for illustrating the placement of the mechanical portion;
- Fig. 9(b): is a plan view of the optical head and the magnetic head of the drive unit shown in Fig. 9(a);
- Fig. 10: is a block diagram of the controller portion of the drive unit shown in Figs. 9(a) and 9(b);
- Fig. 11: is a cross-sectional view of the vibration-isolating structure of the drive unit shown in Figs. 9(a) and 9(b);
- Fig. 12(a): is a cross-sectional view of an upper cover-driving mechanism that can be used with the drive unit shown in Figs. 9(a) and 9(b), and in which the upper cover is closed;
- Fig. 12(b): is a cross-sectional view similar to Fig. 12(a), but in which the upper cover is opened;
- Fig. 13: is a cross-sectional view of a drive unit forming Example 8 of the invention;
- Fig. 14(a): is a plan view of the magnetic head and its surroundings of the drive unit shown in Fig. 13;
- Fig. 14(b): is a side elevation of the magnetic head and its surroundings shown in Fig. 14(a);
- Fig. 15(a): is a plan view of a magnetic head and its surroundings different from the magnetic head and the surroundings shown in Fig. 13;
- Fig. 15(b): is a side elevation of the magnetic head and its surroundings shown in Fig. 15(a);
- Fig. 16(a): is a plan view of a further magnetic head and its surroundings different from the magnetic head and the surroundings shown in Fig. 13;
- Fig. 16(b): is a side elevation of the magnetic head and its surroundings shown in Fig. 16(a);
- Fig. 17(a): is a cross-sectional view of a drive unit forming a first modification of the drive unit shown in Fig. 13;
- Fig. 17(b): is a cross-sectional view of a drive unit forming a second modification of the drive unit shown in Fig. 13;
- Fig. 17(c): is a cross-sectional view of a drive unit forming a third modification of the drive unit shown in Fig. 13;
- Fig. 18: is a diagram illustrating successive steps performed by the drive unit shown in Fig. 17, (b) and (c), to move the magnetic head;
- Fig. 19: is a perspective view of a disk cartridge acting as an information storage medium forming Example 9 of the invention, and in which a shutter is opened;
- Fig. 20: is a view similar to Fig. 19, but in which the shutter is closed;
- Fig. 21: is a vertical cross section of the disk cartridge shown in Fig. 19;
- Fig. 22: is a plan view of the disk cartridge shown in Fig. 19;
- Fig. 23: is a vertical cross section of the disk cartridge shown in Fig. 19;
- Fig. 24: is a fragmentary side elevation in cross section of a drive unit forming Example 10 of the invention;
- Fig. 25: is a view similar to Fig. 24, but in which the disk cartridge has been lowered, and an optical storage disk and a magnetic storage disk accommodated in the cartridge are clamped to their respective spindle motors;
- Fig. 26: is a fragmentary plan view of the drive unit shown in Fig. 24;
- Fig. 27: is a view similar to Fig. 26, but in which a holder has been removed;
- Fig. 28: is a side elevation in cross section of a CD unit of the drive unit shown in Fig. 24, taken substantially along a vertical line passing through the center of the spindle motor of the optical reader mechanism;
- Fig. 29: is a fragmentary side elevation in cross section of the drive unit shown in Fig. 24, taken substantially along a vertical line passing through the center of the spindle motor of the magnetic drive mechanism;
- Fig. 30: is a schematic side elevation of the drive unit shown in Fig. 24, for showing the condition in which a first or second casing forming a disk cartridge is fully loaded in the corresponding unit;
- Fig. 31: is a perspective view of the drive unit shown in Fig. 24, for showing the condition in which the disk cartridge has been loaded;
- Fig. 32: is a cross-sectional view of an improved clamping mechanism of the drive unit shown in Fig. 24, for showing surroundings of spindle motors;
- Fig. 33: is a plan view of the spindle motor and its surroundings of the clamping mechanism shown in Fig. 32; and
- Fig. 34: is a cross-sectional view taken along line C-C' of Fig. 33.

### Best Mode for Carrying Out the Invention

### EXAMPLE 1

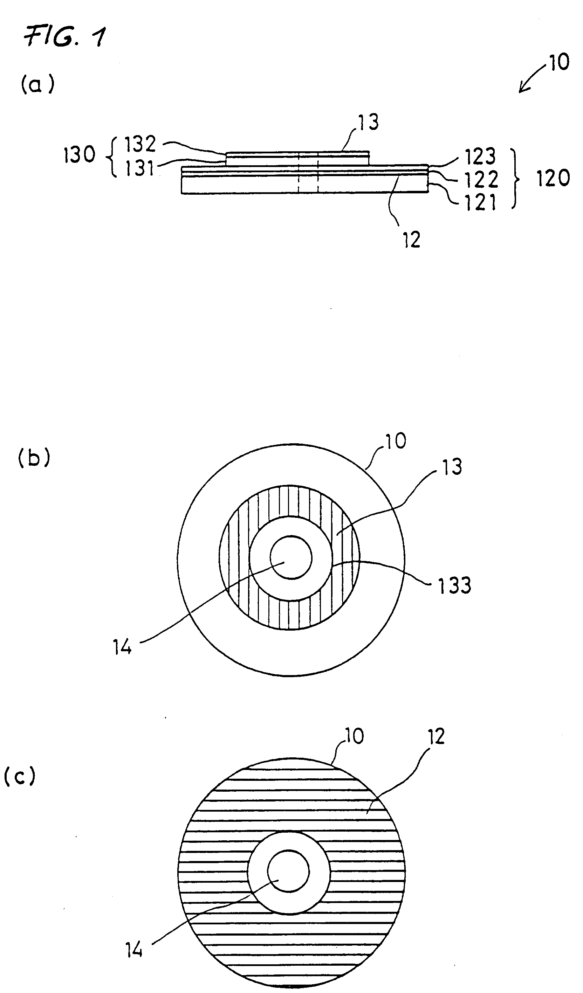

The structure of an information storage medium forming Example 1 of the present invention is described next by referring to Fig. 1, (a)-(c). This storage medium essentially consists of a read-only optical storage medium such as a CD-ROM but a magnetic storage portion made of a magnetic material is formed on the storage medium. This single information storage medium permits reading of information from its optical storage portion and enables information to be written to and read from the magnetic storage portion.

Fig. 1, (a)-(c), show the structure of this example of information storage medium. Fig. 1(a) is a cross-sectional view schematically showing the structure of the medium. Fig. 1(b) is a plan view of the medium, showing the front side. Fig. 1(c) is a bottom view of the medium, showing the rear side.

In these figures, the information storage medium is generally indicated by reference numeral 10 and comprises a CD-ROM 120 and a magnetic storage medium sheet 130 bonded to the CD-ROM 120. The CD-ROM 120 consists of a ROM base plate 121 made of polycarbonate, a reflective film 122 made of an aluminum alloy formed on the front surface of the base plate 121, and a protective film 123 made from a resin that hardens when exposed to light. The protective film 123 is formed on the reflective film 122 by spin coating. This CD-ROM 120 has the same structure as an ordinary CD-ROM.

The magnetic storage medium sheet 130 comprises a plastic base film 131 and a magnetic material 132 applied to the surface of the film 131. This sheet 130 is bonded to the protective film 123 of the CD-ROM 120. The rear surface of the sheet 130 and the front surface of the protective layer 123 are bonded together via an adhesive. As shown in Fig. 1(c), almost whole of the rear surface of the information storage medium 10 forms an optical storage portion 12. On the front side of the medium 10, the magnetic storage medium sheet 130 forms a magnetic storage portion 13 on a part of the front surface of the CD-ROM 120, as shown in Fig. 1(b). The medium is centrally provided with a hole 14 to permit the information storage medium 10 to be clamped when it is loaded into a disk drive (not shown) having an optical head, or an optical pickup, for reading information from the optical storage portion 12 and a magnetic head for writing and reading information to and from the magnetic storage portion 13.

This disk drive (not shown) is capable of reading information from the optical storage portion 12 of the information storage medium 10 or the magnetic storage portion 13. Also, the disk drive is able to record, for example, intermediate results of calculations in the magnetic storage portion 13, the calculations being performed according to the information read out. Therefore, the single information storage medium 10 combines the functions of a CD-ROM and a floppy disk. In particular, the information storage medium 10 has the optical storage portion 12 which has a large storage capacity but cannot be rewritten and the magnetic storage portion 13 that has a small storage capacity but can be readily rewritten. The optical storage portion 12 is used as a ROM, while the magnetic storage portion 13 is used as a RAM. In this way, the information storage medium 10 which has a large storage capacity and can be rewritten can be realized. Therefore, if the information storage medium 10 of this example is used in a game machine, then processing can be performed while reading a large amount of information stored in the optical storage portion 12. If the processing is interrupted, information indicating the intermediate condition is recorded in the magnetic storage portion 13. If the processing is resumed, information regarding the intermediate condition is read from the magnetic storage portion 13. The processing can be resumed from the interrupted state according to the retrieved information.

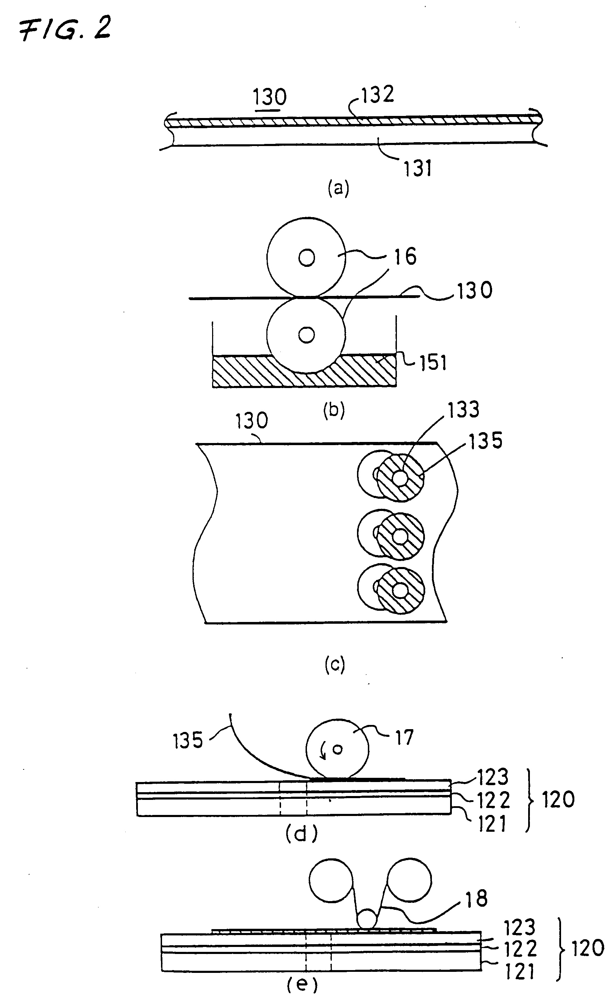

Since the optical storage portion 12 is similar in structure to an ordinary optical storage disk, or a CD-ROM, the present information storage medium 10 can be accessed also by a conventional disk drive for use with a read-only optical storage medium. Hence, this information storage medium is compatible with the prior art CD-ROM. The manner in which the information storage medium 10 of this structure is fabricated is described below by referring to Fig. 2, (a)-(e), which illustrate some successive steps for fabricating the medium 10.

First, the CD-ROM base plate 121 is molded out of polycarbonate by injection molding, using molding dies. An aluminum alloy is sputtered on one side of the base plate 121 to form the reflective film 122. Then, the protective film 123 is formed on the reflective film 122 by spin coating from a resin that hardens when exposed to light, thus forming the CD-ROM 120. Up to this step, this method is similar to the ordinary method of fabricating CD-ROMs. Therefore, detailed description of these steps with reference to figures is omitted herein.

Then, as shown in Fig. 2(a), the magnetic storage medium sheet 130 consisting of the plastic base film 131 to which the magnetic material 132 is applied is prepared. This sheet 130 is fabricated by the same steps as used to make ordinary flexible magnetic disks.

Then, as shown in Fig. 2(b), an adhesive 151 is applied to the rear surface of the magnetic storage medium sheet 130 by the use of a pair of rollers 16.

Thereafter, as shown in Fig. 2(c), the magnetic storage medium sheet 130 is blanked into a sheet 135 of a desired shape. As shown in Fig. 2(d), pressure is applied to the surface of the CD-ROM 120 by a roller 17 to bond the sheet to the CD-ROM. The bonded region forms the magnetic storage portion 13 of the information storage medium 10 shown in Fig. 1(b). The rear side of the medium 10 forms the optical storage portion 12 as shown in Fig. 1(c).

In practice, however, information is read from the optical storage portion 12 shown in Fig. 1(c) through the transparent base plate 121 as shown in Fig. 1(a). Exactly, therefore, the optical storage portion 12 is located on the same side as the magnetic storage portion 13 as viewed from the base plate 121.

Subsequently, as shown in Fig. 2(e), the surface of the magnetic storage portion 13 is ground with abrasive tape 18 to smoothen the movement of the magnetic head. Thus, the information storage medium 10 is completed.

In the present example of the method of fabricating the information storage medium 10 constructed in this way, the contour of the bonded magnetic storage medium sheet 130, or the blanked sheet 135, is circular. The shape of the contour is not limited to this. If a sufficient number of tracks can be secured in the magnetic storage portion 13 of the information storage medium 10, then the contour can be quadrilateral. In this case, the magnetic storage medium sheet 130 can be blanked without producing any unwanted portions. In Figs. 1(b) and 2(c), no limitations are imposed on the size and the shape of the hole 133 formed in the center of the magnetic storage medium sheet 130, or the blanked sheet 135, as long as clamping to the medium 10 is not hindered. The aforementioned grinding step may yield the same advantage as the present example if it is performed before the magnetic storage sheet 130 is bonded.

### EXAMPLE 2

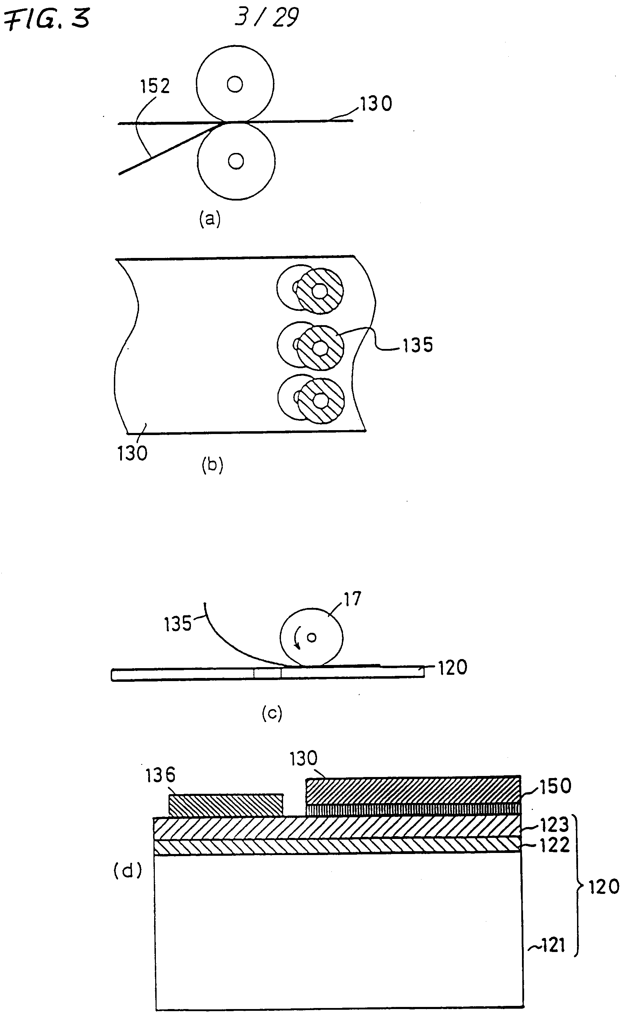

A fabrication method illustrated in Fig. 3, (a)-(c), can be adopted instead of the fabrication method described in Example 1. Fig. 3, (a)-(c), are cross-sectional views illustrating some successive steps of the present fabrication method. It is to be noted that like components are indicated by like reference numerals in various figures and that those components which have been already described will not be described below.

First, a magnetic storage medium sheet 130 is prepared in the same way as in the fabrication method of Example 1. Then, as shown in Fig. 3(a), a both-sided adhesive sheet 152 is bonded to one side of the magnetic storage medium sheet 130.

Then, as shown in Fig. 3(b), the sheet 135 of a desired shape is blanked out of the magnetic storage medium sheet 130. The sheet 135 is bonded to the front surface of the CD-ROM 120 while applying pressure by the roller 17 as shown in Fig. 3(c). As described already in connection with Fig. 2(e), the surface of the magnetic storage portion 13 is ground with the abrasive tape 18, thus completing the information storage medium 10. The aforementioned grinding step may yield the same advantage as the present example if it is performed before the magnetic storage sheet 130 is bonded.

As shown in Fig. 3(d), in the information storage medium 10, labels, a trade mark, etc. are printed with a printing ink 136 on the protective layer 123 where the magnetic storage medium sheet 130 is not bonded. If this is done in the final step, the printing is difficult to perform because a step corresponding to the thickness of the magnetic storage medium sheet 130 exists on the front surface of the protective layer 123. Therefore, after the reflective film 122 and the protective film 123 are formed on one surface of the CD-ROM base plate 121, labels etc. are printed with the printing ink 136, as shown in Fig. 3(d). Thereafter, the step of Fig. 3(c) is effected to bond the sheet 130 to the protective layer 123 via an adhesive layer 150 consisting of a double-sided adhesive sheet or an adhesive. In this fabrication method, labels and so on can be printed in the absence of the step and so the printing step can be simplified. Furthermore, the degree of freedom with which the labels can be designed is increased. In addition, the printing quality is enhanced.

### EXAMPLE 3

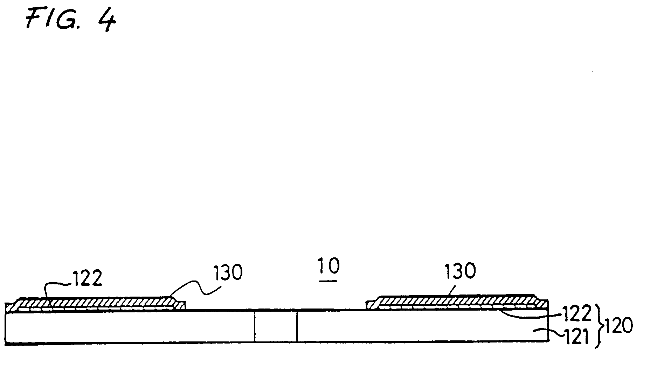

An information storage medium forming Example 3 of the invention is next described by referring to Fig. 4 which is a cross-sectional view of this information storage medium. This Example 3 is an improvement over Examples 1 and 2 and the methods of fabricating them. Accordingly, the present example has points common with Examples 1 and 2 and the methods of fabricating them. Since like components are denoted by like reference numerals in various figures, these common points will not be described below.

In this information storage medium 10, a reflective film 122 is formed on the front surface of a CD-ROM base plate 121 but no protective coating is formed on the front surface. Instead of a protective coating, a magnetic storage sheet 130 is bonded to protect the reflective film 122. Therefore, the sheet 130, or the blanked sheet 135, is large enough to extend beyond both inner and outer limits of the reflective film 122. The area of the magnetic storage portion 13 shown in Fig. 1(b) is wider than that of the optical storage region 12 shown in Fig. 1(c).

In a method of fabricating the information storage medium 10 constructed as described above, when the CD-ROM 120 is manufactured, protective effect is produced by bonding the magnetic storage medium sheet 130 to the reflective film 122 without forming a protective coating on the reflective film 122. In this case, the sheet 130 is blanked after attaching an adhesive or a both-sided adhesive tape to one side of the sheet 130, in the same way as in Examples 1 and 2. The size and the shape of the sheet 130, or the blanked sheet 135, are so set that it extends beyond both inner and outer limits of the region of the reflective film 122. The information storage medium 10 shown in Fig. 4 can be fabricated by bonding the sheet 130 to the CD-ROM 120.

By adopting the above-described structure and fabrication method, oxidation of the reflective film 122 can be prevented by the magnetic storage medium sheet 130 and the adhesive or both-sided adhesive tape. This makes it unnecessary to form a protective coating on the reflective film 122. As a result, the method of fabricating the information storage medium 10 can be simplified. Labels, a trade name, and so on may be printed on the storage medium sheet 130.

### EXAMPLE 4

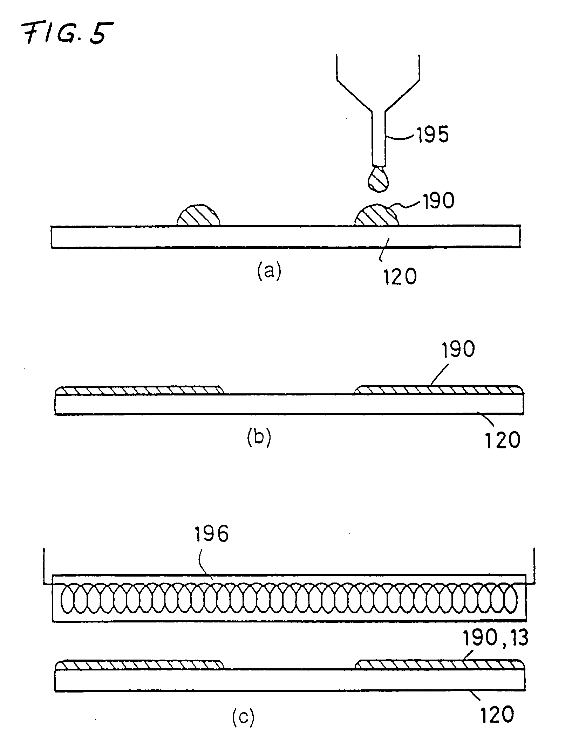

A method of fabricating an information storage medium forming Example 4 of the invention is described next by referring to Fig. 5, (a)-(c), which are cross-sectional views illustrating some successive steps performed to fabricate this example. Those components which have been already described in Examples 1-3 will not be described below.

The CD-ROM 120 is fabricated by the same steps as in Examples 1-3. Then, a resin 190 is caused to drop onto the front surface, or onto the reflective film, of the CD-ROM 120 from a nozzle 195, as shown in Fig. 5(a). The resin 190 consists of a binder resin in which a magnetic material is dispersed. Subsequently, the resin 190 containing the magnetic material is applied to the CD-ROM by spin coating, as shown in Fig. 5(b).

Thereafter, as shown in Fig. 5(c), the resin is heated by a heater 196 to evaporate the solvent component of the binder resin, thus fixing the resin 190 containing the magnetic material. In this way, the magnetic storage portion 13 is formed.

The surface of that portion of the magnetic storage portion 13 on which magnetic information storage tracks are formed is smoothed by the use of abrasive tape, thus completing the information storage medium 10.

In the present example, spin coating is adopted in applying the resin 190 containing the magnetic material, because this resin 190 can be easily uniformly spread. Any other coating method can be utilized in applying the resin. In this case, the magnetic storage portion 13 may be formed after the protective film is formed on the front surface, or on the reflective film, of the CD-ROM 120 from a resin that hardens when exposed to light.

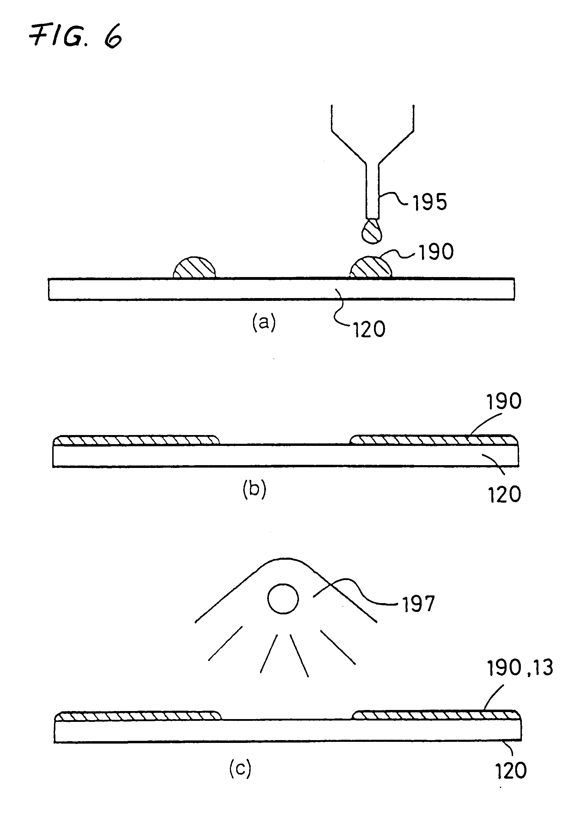

The used resin is not restricted to thermosetting resins. For instance, the resin 190 consisting of an optically setting resin in which magnetic power is dispersed is applied to the front surface, or on the reflective film, of the CD-ROM 120 by spin coating or other method, as shown in Fig. 6, (a) and (b). Then, as shown in Fig. 6(c), the resin 190 is illuminated with ultraviolet rays through the use of an ultraviolet lamp 197, so that the resin hardens. Then, the rear surface is polished to finish the CD-ROM. In this fabrication method, most of the conventional fabrication steps for fabricating CD-ROMs can be used directly. Hence, high productivity is obtained. The polishing step of these fabrication steps can be omitted if the smoothness and the flatness of the surface of the magnetic storage portion are sufficiently high.

### EXAMPLE 5

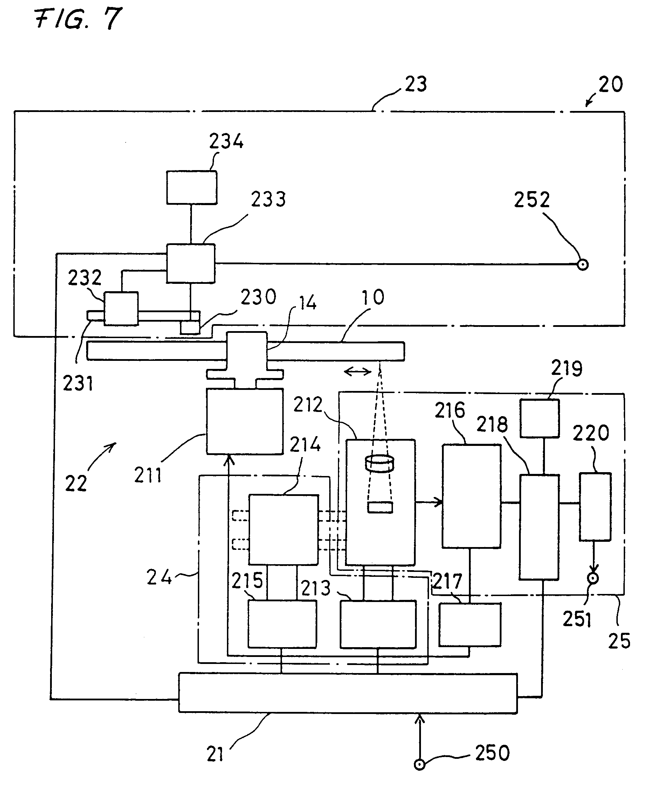

A disk drive forming Example 5 of the present invention is next described by referring to Fig. 7, which is a block diagram showing the structure of the disk drive. This disk drive can write and read information to and from the disklike information storage medium forming Example 1 as already described in connection with Fig. 1, (a)-(c). The disk drive comprises an optical reader mechanism for reading information from the optical storage portion 12 and a magnetic drive mechanism for writing and reading information to and from the magnetic storage portion 13. The disklike storage medium 10 is loaded on the side of the disk drive through the hole 14 formed in the center of the medium 10.

Referring still to Fig. 7, this disk drive, generally indicated by reference numeral 20, comprises a disk-rotating mechanism 22 for clamping and rotating the loaded information storage medium 10 while holding it horizontal, a magnetic drive mechanism 23 for writing and reading information to and from the magnetic storage portion 13 formed on the front surface of the information storage medium 10, an optical head drive mechanism 24 for driving an optical head 212, and a system controller 21 that controls the operation of both the optical head drive mechanism 24 and the magnetic drive mechanism 23. The optical head 212 acts to read information from the optical storage portion 12 formed on the rear surface of the information storage medium 10. The disk drive 20 is further equipped with an optical information-processing portion (or an optical information reading control mechanism) 25 for processing information read by the optical head 212. According to the results of the processing made by the processing portion 25, a CLV servomechanism 217 orders the disk-rotating mechanism 22 to rotate the information storage medium 10 under certain conditions. More specifically, the optical information-processing portion 25 of the disk drive 20 controls the disk-rotating mechanism 22 in such a way that as the optical head, or an optical pickup, goes away from the center of the medium 10, the medium 10 is rotated at a slower speed, and that as the optical head approaches the center of the medium, it is rotated at a higher speed. In this way, information is read out at a constant line velocity (CLV). Consequently, the storage density can be enhanced.

The disk-rotating mechanism 22 has a spindle motor 211. The information storage medium 10 is clamped at the front end of the spindle motor 211. The medium can be rotated while maintained horizontal.

The optical head drive mechanism 24 is mounted on the side of the rear surface of the information storage medium 10. The optical head drive mechanism 24 comprises a sled servomechanism 215, a linear motor 214 for moving the optical head 212 radially of the medium 10 under the control of the servomechanism 215, and a focus tracking servomechanism 213 for focusing the optical head 212. The sled servomechanism 215 is controlled by the system controller 21 so that information can be read from the optical storage portion 12 formed on the rear surface of the medium 10. The focus tracking servomechanism 213 controls the vertical position of the optical head with respect to the optical storage portion 12 (i.e., provides a focus control) and fine adjusts the radial position of the head with respect to the optical storage portion (i.e., provides a tracking control) under instructions from the system controller 21. Optical information read by the optical head 212 is demodulated by an EFM (eight to fourteen modulation) demodulation circuit 216 in the optical information-processing portion 25 and then errors contained in the information are corrected by a CIRC (cross- interleave Reed-Solomon codes) error detection portion 218 and an EDC (error detection and correction) circuit 220. Finally, the fetched information free from errors appears at an output 251. A RAM 219 included in the optical information-processing portion 25 is a memory for temporarily storing the fetched data. Reading of data from the optical storage disk and correction of the data are carried out under the control of the system controller 21. The focus tracking servo control mechanism and the mechanisms for reading information and for correcting the errors are all known and so these mechanisms are not described herein. Of course, other constructions can be employed.

As is well known in the art, the optical information read by the optical head 212 is, in practice, passed through a head amplifier, an analog-to-digital converter circuit, a PLL circuit, etc., before applied to the EFM demodulation circuit 216. Thus, the analog signal is converted into digital form. Circuitry for these pretreatments is omitted in Fig. 7. In the following description, it is assumed that these pretreatments are also performed within the block of the EFM demodulation circuit 216. Therefore, the clock component (described later) of the retrieved signal is data clock used for EFM demodulation and extracted by a PLL at the input stage of the EFM demodulation circuit 216.

On the other hand, the magnetic drive mechanism 23 is disposed on the side of the front surface of the information storage medium 10. This mechanism 23 has a magnetic head 230 capable of writing and reading information to and from the magnetic storage portion 13 formed on the front surface of the medium 10. This head 230 is connected to a head load/unload mechanism 232 via an arm 231. The load/unload mechanism 232 is controlled under instructions from a magnetic storage system controller 233 such that the magnetic head 230 makes and breaks contact with the magnetic storage portion 13. A mechanism (not shown) for moving the magnetic head 230 so that the head 230 can be moved radially of the information storage medium 10 may also be provided.

The disk drive 20 constructed in this manner has the optical head drive mechanism 24 and the magnetic drive mechanism 23 and so the drive 20 is able to fetch information stored in the optical storage portion 12 of the information storage medium 10. Additionally, the drive 20 can write and read information to and from the magnetic storage portion 13.

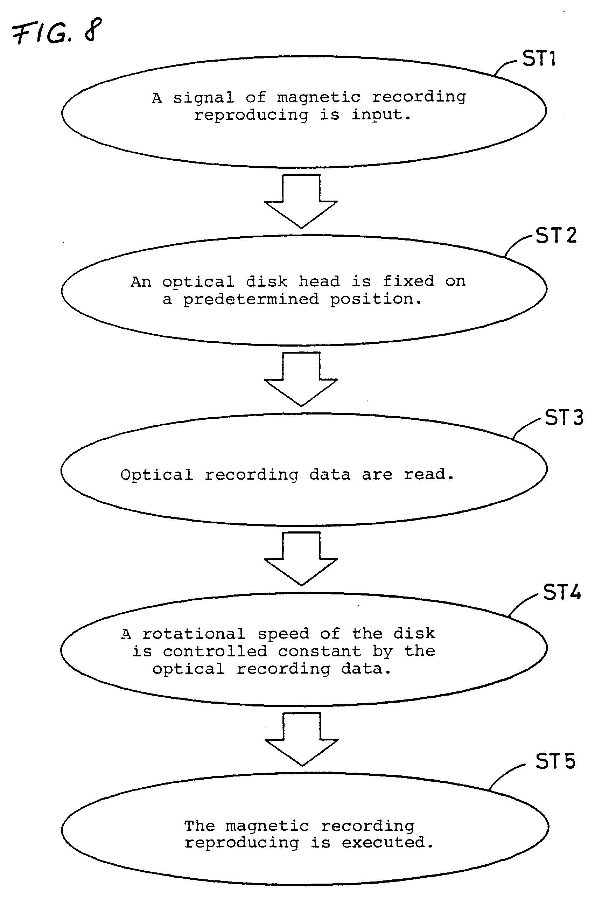

The operation of this disk drive 20 makes use of the CLV method as described in detail later. The rotational speed of the disk is controlled according to the information stored in the optical storage portion 12. That is, the present disk drive 20 magnetically writes or reads information to or from the magnetic storage portion 13 of the information storage medium 10 in the sequence illustrated in Fig. 8.

Referring to Fig. 8, in step ST1, an instruction signal for causing the disk drive 20 to magnetically write or read information to or from the magnetic storage portion 13 is applied.

Then in step ST2, the optical head 212 is locked at a given location above the optical storage portion 12 of the information storage medium 10.

In step ST3, optical information is read from the optical storage portion 12.

In step ST4, the rotational speed of the information storage medium 10, or the optical storage disk, is controlled according to the optically stored data so as to be maintained constant.

Thereafter, in step ST5, magnetic writing or reading to or from the magnetic storage portion 13 of the information storage medium 10 is carried out.

Accordingly, in the present disk drive 20, if an instruction signal urging it to magnetically write or read information to or from the magnetic storage portion 13 is applied during magnetic writing or reading, the magnetic writing or reading is not immediately effected. Rather, the optical head 212 is locked at a given position above the optical storage portion 12. Optical data is read from the optical storage portion 12. Then, the rotational speed of the disk is controlled. When information is written or read to or from the magnetic storage portion 13, the optical information-processing portion 25, or an optical drive control mechanism, of the CLV method acts as a magnetic drive control mechanism for controlling the rotational speed of the information storage medium 10. Consequently, the disk rotation control system used during reading from the optical storage portion 12 is also effectively utilized during magnetic writing and reading. Hence, magnetic reading and writing are enabled without providing additional mechanism.

One example of the above-described sequential operation of the disk drive 20 is described below. Before describing magnetic writing and reading, a method of controlling the rotational speed of the disk when information is read from the optical storage portion 12 of the information storage medium 10 is described. In the present CLV method, data is stored in the optical storage portion 12 such that the data transfer rate is kept constant when the speed of the optical head 212 relative to the face of the disk is maintained at a constant value.

The spindle motor 211 drives the information storage medium 10. Optical information is read from the optical storage portion 12 of the medium 10 by the optical head 212 and passed through the EFM demodulation circuit 216. Then, the CLV servomechanism 217 controls the spindle motor 211. Thus, the rotational speed of the disklike medium 10 is controlled. The CLV servomechanism 217 controls the rotation of the spindle motor 211 in such a way that the data transfer rate read from the optical storage portion 12 by the optical head 212 is kept constant.

The CLV servomechanism 217 performs the following control operations according to the optical information. When the optical information is demodulated in the EFM demodulation circuit 216, the line speed obtained at this time is compared with a reference line speed. For this purpose, the clock component of the retrieved signal is compared with a reference clock signal produced by a quartz oscillator. If they differ, a signal is kept produced to the CLV servomechanism 217 such that the rotational speed of the motor 211 is changed until the line speed reaches the given reference value. The CLV servomechanism 217 controls the rotational speed of the motor 211 according to this signal. In Fig. 7, the CLV servomechanism 217 is shown to control the rotational speed of the motor 211 without via the system controller 21. The rotational speed may also be controlled by the following method. The optical information from the optical head 212 is applied to the system controller 21, which reads the transfer rate of the optical information. According to the read rate, the controller 21 gives instructions to the CLV servomechanism 217. In either case, data is stored in the optical storage portion 12 such that the data transfer rate is kept constant when the speed of the optical head 212 relative to the face of the information storage medium 10 is maintained at a constant value. The rotational speed of the medium 10 is controlled in such a manner that the transfer rate of the data read from the optical storage portion 12 by the optical head 212 is maintained constant. Therefore, the rotational speed of the medium 10 is controlled at a desired value by locking the optical head 212 at a given location. As a result, in the CLV method, as the optical head 212 goes away from the center of the medium 10, this medium turns at a lower speed. As the head approaches the center of the medium 10, it rotates at a higher speed. In this way, high-density recording is accomplished. The CLV servomechanism 217 operates in the manner described thus far during reading of optical information.

The magnetic writing and reading are conducted in the manner described below. Data is written to and read from the magnetic storage portion 13 of the disk via the magnetic head 230. This head 230 is mounted to the arm 231. The head load/unload mechanism 232 brings the magnetic head 230 into or out of contact with the magnetic storage portion 13.

Specifically, when data is written to or read from the magnetic storage portion 13, the magnetic head 230 is contacted with the magnetic storage portion 13; otherwise the head 230 is not in contact with the magnetic storage portion. A RAM 234 temporarily stores data which is to be written to or read from the magnetic storage portion 13. Data stored or to be stored there is transferred through an input-output portion 252 for magnetic information. A signal sent from the system controller 21 to load or unload the magnetic head 230 is once accepted by the magnetic storage system controller 233. Then, the controller 233 sends the signal to the head load/unload mechanism 232.

The magnetic storage system controller 233 modifies the waveform of the data read out, detects errors contained in the data read out, and performs other operations. These functions of the system controller 233 can be distributed to various other portions. For example, wave-shaping can be attained by inserting a head amplifier or the like between the magnetic head 230 and the magnetic storage system controller 233. Also, detection of errors contained in data may also be made by the system controller 21.

The magnetic head 230 is loaded and unloaded under the control of the head load/unload mechanism 232. The magnetic head 230 magnetically writes and reads information under the control of the magnetic storage system controller 233. The timing of the loading and unloading and magnetic writing and reading which constitute features of the invention are described below. The magnetic writing and reading are done in the sequence illustrated in Fig. 8.

Referring to Fig. 8, in step ST1, an instruction signal for causing the disk drive 20 to magnetically write and read information to and from the magnetic storage portion 13 is applied. For example, a signal for reading magnetically stored information is applied to an input 250 of the system controller 21 from the outside.

Then, in step ST2, the optical head 212 is locked at a certain position above the optical storage portion 12 of the information storage medium 10, in the same way as in the above-described method of reading optical information. In particular, the system controller 21 produces a signal for moving the optical head 212 into a given position to the sled servomechanism 215. The sled servomechanism 215 moves the linear motor 214 according to this signal. The optical head 212 is moved linearly radially of the medium 10. If external information is read into a register, memory, or the like in the system controller 21 and the controller controls the whole system according to the information, then the operation for locking the optical head 212 at a given position is enabled by entering an instruction signal to lock the head at the given position similarly to the external signal.

Then, in step ST3, optical data is read from the optical storage portion 12. In this example, data is read from the optical storage portion 12 via the optical head 212. The focus tracking servo control associated with the reading control operation, the method of reading the signal, and the method of controlling the rotation of the disk are similar to those adopted during reading of optical information and so these will not be described below.

In step ST4, the rotational speed of the information storage medium 10 is controlled so as to be maintained constant according to optically stored data. This control operation is carried out in the same way as the control operation performed when optical information is read out. That is, optical information is read from the optical storage portion 12 of the medium 10 via the optical head 212 and passed through the EFM demodulation circuit 216. The CLV servomechanism 217 controls the spindle motor 211, whereby the rotational speed of the disk is controlled.

Subsequently, in step ST5, information is magnetically written or read to or from the magnetic storage portion 13 of the medium 10. Since the rotational speed of the disk is maintained constant, the system controller 21 produces a magnetic head load signal to the magnetic storage system controller 233. This controller 233 instructs the head load/unload mechanism 232 to bring the magnetic head 230 into contact with the magnetic storage portion 13. This permits information to be magnetically written or read to or from the magnetic storage portion. This magnetic head load signal is produced after an instruction signal for magnetic writing or reading is applied to the system controller 21 after or slightly before the rotational speed of the disk settles at a given value. What is important is that the timing at which information is magnetically written or read is controlled after reading of optical data is executed and the rotational speed of the disk has stabilized. After the line speed has become a predetermined constant value, the rotational speed of the spindle motor 211 is maintained. Then, information is magnetically written or read.

As described above, magnetic writing or reading is not immediately carried out according to instructions as to the writing or reading. Rather, the optical head 212 is locked at a given position. Optical data is read from the optical storage portion 12. The rotational speed of the disk is controlled according to this data. That is, the disk drive operates in the sequence illustrated in Fig. 8. Consequently, the optical information-processing portion 25 which includes the disk rotation control system and the optical information reading control mechanism and is used during reading of optical information can also be effectively used during magnetic writing and reading.

It is to be noted that the disk drive 20 described in connection with Fig. 7 is only exemplary. Other control system may also be used as long as it controls the rotational speed of the disklike information storage medium 10 by the use of the control system which controls the rotational speed of the medium 10 when the position of the optical head 212 is locked at a given position and optical information is read during magnetic writing and reading as illustrated in the sequence of Fig. 8.

In the present disk drive 20, the magnetic storage portion 13 is formed on the front surface of the information storage medium 10. The optical storage portion 12 is located on the opposite side of the magnetic storage portion. Therefore, the optical head 212 and the magnetic head 230 are disposed on opposite sides of the medium 10. Consequently, it is easy to manufacture the medium 10. Also, the various mechanisms of the disk drive 20 can be readily placed properly. Where the magnetic storage portion 13 is formed on the same side as the optical storage portion of the storage medium 10, the optical head 212 and the magnetic head 230 may be mounted on the same side on the medium 10.

In the present example, if the position of the magnetic head 230 for magnetically writing and reading information is locked, the amount of data stored in the magnetic storage portion 13 is limited to the capacity of 1 track. Where magnetic recordings are made in a plurality of tracks to increase the amount of recorded data, plural magnetic heads 230 are mounted. Alternatively, the magnetic head 230 is driven by a magnetic head-moving mechanism using a stepper motor such as in a conventional magnetic drive unit so that the head can write and read information to and from plural tracks. Where the amount of information magnetically stored is so small that a plurality of tracks are not needed, vibration of the face of the disk can be suppressed and the operation can be stabilized by bringing a dummy head similar to the magnetic head into contact with the disk. Where the magnetic storage portion 13 has plural tracks, it is easy to magnetically write and read information without modifying the rotational speed of the medium 10 when the magnetic head 23 moves. It is also possible to improve the storage density in the magnetic storage portion 13 by carrying out the steps 2-4 of the sequence illustrated in Fig. 8 whenever the magnetic head 23 is moved.

In the present disk drive 20, the system controller 21 and the magnetic storage system controller 233 can be combined into a unit. The RAM 234 used to write and read data to and from the magnetic storage portion 13 can be an internal memory of the system controller 21 or other memory.

In the present disk drive 20, the system controller 21 produces a signal to lock the optical head 212 at a given position after an instruction signal for magnetic writing or reading is applied to the system controller 21. The present invention is not limited to this method. For instance, a generally adopted, so-called pause method may also be exploited to lock the head at a given position. That is, reading is halted at a certain optical storage track while the disk keeps rotating. The above-described method of controlling the disk in magnetically writing and reading information can be used as long as the optical head 212 is locked within tolerances of the rotational speed needed for magnetic writing and reading. Accordingly, if the position of the optical head 212 is locked and the rotational speed of the disk is determined according to the information read from the disk under this condition, then the optical head 212 may be mechanically locked when information is written or read to or from the magnetic storage portion.

In the present disk drive 20, the rotation of the disk is controlled according to optically retrieved information in such a way that the rate at which data is optically read from the information storage medium 10 is maintained constant. Therefore, the reading can be performed without difficulty even if the CAV method is used, i.e., the amount of optically stored data is uniform throughout every turn of physical track on the storage medium 10. In this case, the rotational speed is constant from whatever location of the medium information is read. Furthermore, the information storage medium 10 can be divided into zones having different radii, and the CAV method can be used in each zone. The amount of information obtained per revolution varies from zone to zone. This is known as a ZCAV method and can also be utilized without difficulty. Information can be magnetically written and read to and from the magnetic storage portion 13 while controlling the rotation of the disk according to optical information in a similar sequence. In order to write and read data to and from the magnetic storage portion 13 of the information storage medium 10 of the above-described CLV system, it is required that the optical head 212 read a certain track. However, if data is stored in the optical storage portion 12 by the CAV method, then the track read by the optical head 212 need not be a certain one. That is, the method used by the present disk drive 20 is not limited to the CLV method, if such information is stored in the disk that holds the rotational speed within a tolerable range.

Where the aforementioned magnetic storage portion 13 has plural tracks, if optical data is stored by the CAV method, and if information is stored in every track on the magnetic storage portion 13 at the same rotational speed, then no problems take place. In the CLV servomechanism described above, the clock component of the fetched signal is compared with the reference clock signal. If the system for processing the fetched signal has a sufficient bandwidth, then the storage density can be changed from track to track during writing or reading to or from the magnetic storage portion 13 by modifying the frequency of the reference clock signal.

These are summarized in Table 1 below. In Table 1, the optical head position means the position assumed when information is written or read to or from the magnetic storage portion 13.

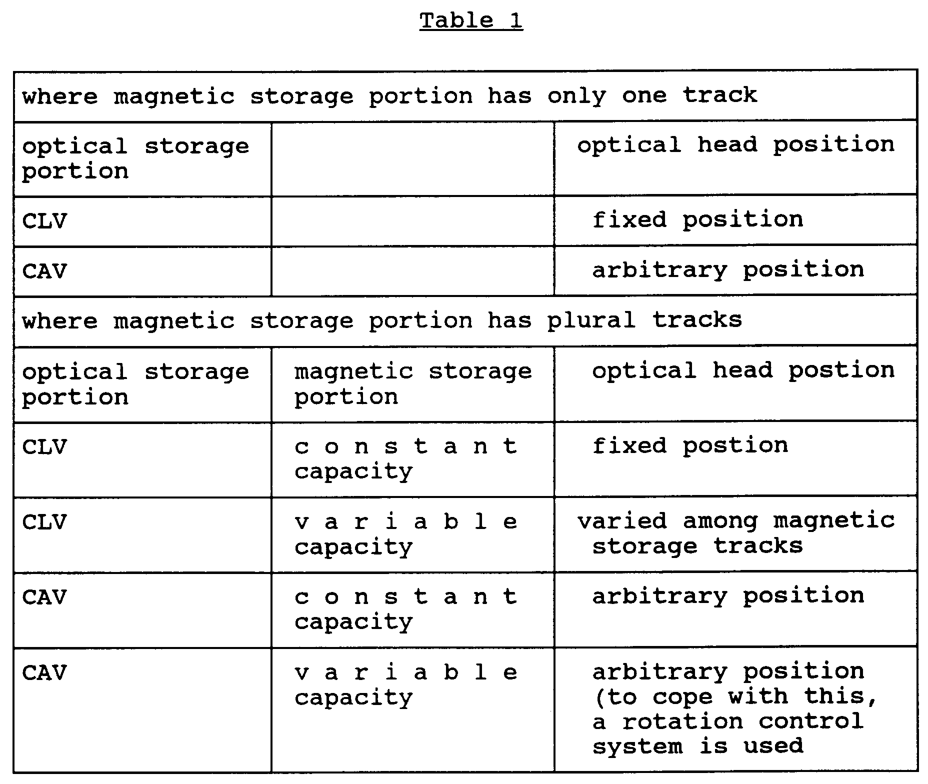

In this way, the present disk drive 20 can find wide application. Where the CLV method is used in writing optical information as in the first example, the disk drive is quite advantageous in terms of capacity. Where the magnetic storage portion 13 has plural tracks, if information is written and read to and from the magnetic storage portion 13 at the same rotational speed, then the method can be implemented most easily.

As a method of loading a disk by the disk drive, either one of the following two methods can be selected: (1) in a front loading method, the disk is loaded from the side of the front surface of the disk drive; (2) in a second method, the disk is loaded from above the disk drive and then the disk is locked by an upper cover. In either case, the accuracy with which the disk is aligned with the magnetic head is maintained by rigidly mounting the magnetic head to the spindle motor for the optical storage portion or to a mount to which the optical head 212 is mounted. Also, external vibration can be isolated. In order to prevent the disk from contacting the magnetic head when the disk is loaded, the adoption of the method using the upper cover is desired. In this case, the magnetic head is mounted to the upper cover. However, it is difficult to obtain a high accuracy in aligning the magnetic head with the disk, because the upper cover itself is not directly mounted to the mount. In addition, external vibration is easily transmitted to the magnetic head. Accordingly, the arm to which the magnetic head is mounted is made movable. The pivot of this arm is firmly mounted to the mount. Consequently, the magnetic head can be aligned with the disk with a high accuracy. Furthermore, external vibration is not easily transmitted to the magnetic head.

In a further modification, either the magnetic head or the arm is connected via a movable portion with a disk-locking cover that is not directly mounted to the mount. When the disk is inserted, the magnetic head and the arm are moved upward together with the disk-locking cover. In this way, the magnetic head can be aligned with the disk with a high accuracy. Additionally, external vibration is not easily transmitted to the magnetic head.

### EXAMPLE 6

An information storage medium and a disk drive forming Example 6 of the invention are next described. This information storage medium is an improvement over the information storage medium described in Example 1. This disk drive is an improvement over the disk drive described in Example 5 and used with the disk drive of this Example 6. Accordingly, the present information storage medium has essentially the same structure as the information storage medium of Example 1. The disk drive of the present example has essentially same structure as the disk drive of Example 5. Therefore, Example 6 is described below by referring to Figs. 1, 7, and 8.

The disk drive 20 of the present example is characterized in that information permitting detection of an optical storage disk having the magnetic storage portion 13 is stored, for example, in the optical storage portion 12 of the information storage medium 10. That is, the above-described information makes it possible to make a decision as to whether the loaded disk is the information storage medium 10 of any one of Examples 1-4. More specifically, in the optical storage portion 12 of the information storage medium 10, or a CD-ROM having a magnetic storage portion, shown in Fig. 1, a certain identification signal is recorded at the front end of the first block storing user's data. For example, this signal may be a part of the title of a tune. However, the contents of the identification signal and the storage position are preferably uniform throughout every CD-ROM having a magnetic storage portion. If the disk is judged not to be an optical disk having the magnetic storage portion 13, then the control section including the system controller 21 and the magnetic storage system controller 233 gives instructions to prevent the magnetic head from making contact with the information storage medium 10. On the other hand, if the disk is found to be an optical storage disk having the magnetic storage portion 13, and if necessary, the magnetic head makes contact with the information storage medium 10. To impart identification information, the medium 10 is received in a case. The case is provided with a concave, a convex portion, or a hole. The presence of absence of such a concave is detected to detect the kind of the information storage medium.

For this purpose, in the present disk drive 20, before information is magnetically written or read, the optical head 212 is moved to the position of the optical storage portion 12 in which the identification signal should be recorded. In this position, the signal is read, and a decision is made as to whether it is a certain identification signal indicating the presence of a magnetic storage portion. If so, the loaded optical disk is an optical storage disk or an information storage medium 10 having the magnetic storage portion according to any one of Examples 1-4. Then, if necessary, the magnetic head 230 is pressed against the disk surface. On the other hand, if the retrieved signal is found not to be the certain identification signal, then loaded optical storage disk does not have the magnetic storage portion and so the magnetic head does not operate. The magnetic head 230 is caused to make contact with the information storage medium 10 or kept away from the medium by the head load/unload mechanism 232 under the control of the system controller 21 and the magnetic storage system controller 233. In this case, if the system controller 21 finds that the optical storage disk has no magnetic storage portion, then an error message can be produced to inform the user of this fact. The disk drive can be designed so that it can be used either with the optical storage disk having the magnetic storage portion or with a conventional optical storage disk having no magnetic storage portion.

The certain identification signal can be recorded at any desired position in the optical storage portion 12. In the present example, the certain identification signal is recorded in the foremost region of the first block storing user's data. Consequently, the disk drive 20 can prevent both magnetic head 230 and information storage medium 10 from getting damaged. Furthermore, the amount of electric power consumed is low. In addition, stable operation is possible.

In these cases, the locked position of the optical head 212 for controlling the rotational speed of the disk during magnetic writing and reading may or may not be coincident with the locked position of the optical head 212 used to make a decision as to whether the optical storage disk has the magnetic storage portion. Where these two positions differ, the above-described sequence is modified. First, the optical head 212 tries to read the signal indicating that the optical storage disk has the magnetic storage portion. If this signal is successfully read, then the head moves to the position in which the signal for controlling the rotational speed for magnetic writing and reading is recorded.

On the other hand, where the two positions agree, the aforementioned two operations can be carried out in one operation. This simplifies mechanical operations. In this case, the same locked position as the position used to find that the disk has the magnetic storage portion can be employed. As one method of controlling the rotational speed of the disk, a frequency converter means such as a frequency division means or a frequency multiplication means is added before the comparison means which compares the clock component of the retrieved optical information with the reference clock signal. For example, if a 1/2-frequency division means is added to the side of the reference clock, then the rotational speed of the disk can be halved. If a 1/2-frequency division means is added to the side of the retrieved optical signal, then the rotational speed can be doubled. A PLL can be used as a further frequency converter means. In this case, any desired rotational speed of the disk can be derived. In other words, the rotational speed of the disk during magnetic writing and reading can be made different from the rotational speed of the disk determined at the position of the optical disk as described in the previous examples, by adding an arithmetic processing means to the conventional disk rotation control mechanism. In this method, magnetic writing and reading can be effected outside the frequency range that is used when optical information is read.

An identification signal indicating that the disk has the magnetic storage portion is recorded on the present information storage medium 10 at the position where a disk drive used only for a conventional optical storage disk starts to read information, taking account of the case in which the information storage medium 10 of any one of Examples 1-4 is loaded into the conventional disk drive used only for the conventional optical storage disk. In this way, the disk can easily cope with incorrect loading of the disk.

### EXAMPLE 7

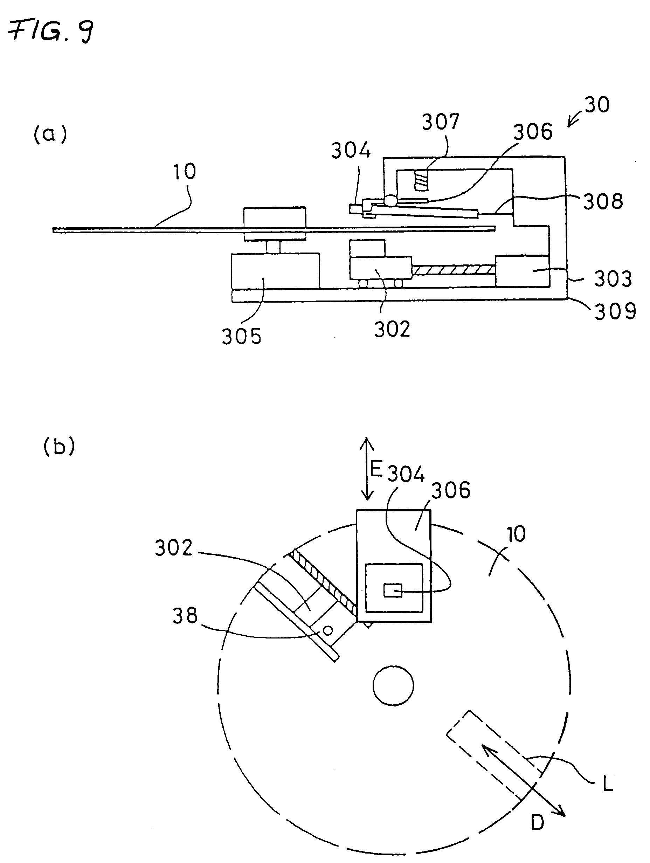

Fig. 9(a) is a cross-sectional view of the mechanical portion of a disk drive forming Example 7 of the invention, for showing the arrangement. Fig. 9(b) is a plan view showing the positional relation between its optical head and its magnetic head. The disk drive of the present example is an improvement over the disk drive of Example 5 and can gain access to the information storage medium 10 of Example 1 already described in connection with Fig. 1. Therefore, only features of the disk drive are described below.

Referring to Fig. 9(a), the present disk drive, generally indicated by reference numeral 30, has an optical head 302 for reading information from the optical storage portion 12 of the information storage medium 10 shown in Fig. 1 and an optical head drive mechanism 303 for the optical head.

Further, the disk drive 30 has a magnetic head 304 for writing and reading information to and from the magnetic storage portion 13 of the medium 10 and a magnetic head-elevating mechanism 306 for moving up and down the magnetic head. The present disk drive 30 is also equipped with a spindle motor 305 for rotating the medium 10 while holding it horizontal. When the medium 10 is in this condition, the optical head 302 and the magnetic head 304 are disposed on opposite sides of the medium 10. The optical head 302 can be moved radially of the medium 10 by the optical head drive mechanism 303. The magnetic head 304 is moved upward or downward by the magnetic head-elevating mechanism 306 to make or break contact with the magnetic storage portion 13 of the medium 10 while supported by a spring mechanism 308. More specifically, a solenoid 307 is mounted above the elevating mechanism 306. When the magnetic head 304 writes or reads information, the solenoid 307 is energized to pull the end of the elevating mechanism 306 upward. The magnetic head 304 which has been raised by the elevating mechanism 306 comes into contact with the magnetic storage portion 13 of the medium 10. When the magnetic head 304 is in contact with the medium 10, the elevating mechanism 306 is not in contact with the magnetic head 304. When the magnetic head 304 neither writes nor reads, a mechanism incorporated within the pivot of the magnetic head-elevating mechanism 306 exerts a force in such a direction that the magnetic head 304 is raised from the magnetic storage portion 13, or the disk surface, of the medium 10.

As shown in Fig. 9(b), the optical head 302 and the magnetic head 304 are spaced from each other circumferentially of the medium 10. An objective lens actuator 38 is mounted at one side of the optical head 302 to shift the objective lens in the direction in which the face of the medium 10 vibrates and toward the eccentric axis, for controlling the laser spot by a servomechanism. Since the objective lens actuator 38 consists of a solenoid actuator, magnetic flux leaks to the surroundings. On the other hand, the magnetic head 304 made of a material of a high magnetic permeability is easily affected by external magnetic flux. To avoid this, in the present disk drive 30, the optical head 302 and the magnetic head 304 are not arranged on the same circumference on the information storage medium 10 but are spaced from each other circumferentially. Hence, the reliability of the operation of the magnetic head 304 is high even if a protective layer of Permalloy is not formed on the magnetic head 304.

Where the information storage medium 10 is enclosed in a cartridge to keep away dust, an opening is formed in one of the front and rear surfaces of the cartridge to gain access to the optical storage portion 12. Another opening is formed in the other surface of the cartridge to have access to the magnetic storage portion 13. These separate openings are spaced from each other circumferentially of the medium 10 to minimize the effect of the leaking flux on the optical head 302. In the present example, as shown in Fig. 9(b), the optical head 302 and the magnetic head 304 are spaced about 135° from each other circumferentially of the medium 10, the position of the optical head 302 being indicated by the broken line L. That is, the magnetic head 304 forms an angle of approximately 45° with respect to an extension line of the seek direction of the optical head 302. No limitations are imposed on the positional relationship between the optical head 302 and the magnetic head 304. Especially, where the tracks of the optical storage portion 12 and of the magnetic storage portion 13 are increased in number, both heads have long strokes as indicated by the arrows D and E, respectively. Even in this case, their respective drive mechanisms do not place restrictions on their mutual arrangement and operation.

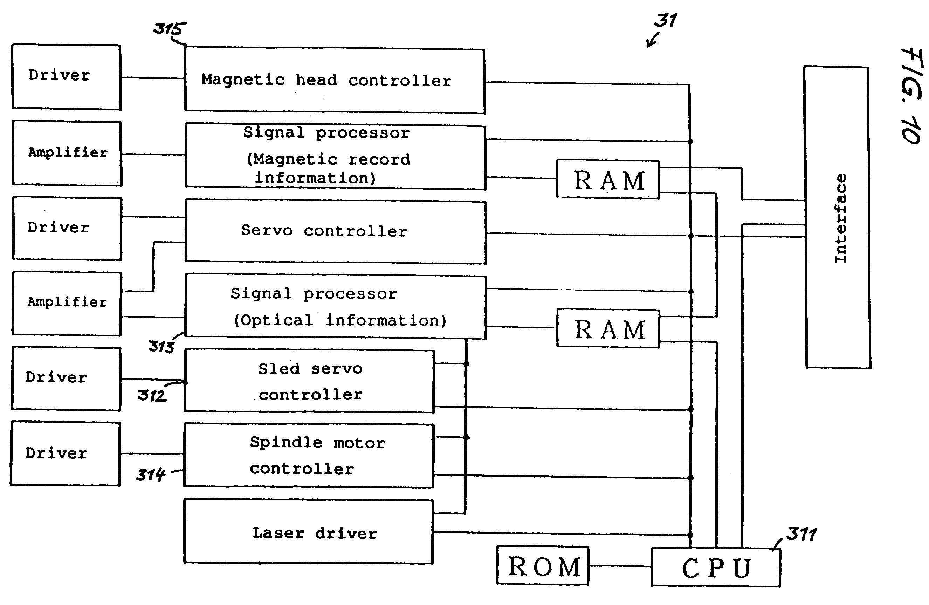

Fig. 10 is a block diagram of the controller of the present disk drive 30. The operation of the present disk drive 30 is described now by referring to this figure, as well as to Fig. 9. Since the controller of the disk drive 30 is essentially identical in structure with the disk drive of Example 5 and so only those portions associated with the operation are described below. Description of other portions is omitted.

In these figures, if a CPU 311 incorporated in the controller 31 receives an instruction to write information to the magnetic storage portion 13, then the CPU 311 causes a sled servo controller 312 to move the optical head 302 into a given position. After the optical head 302 has moved to the given position, the disk drive pauses. The spindle motor 305 is controlled via a spindle motor controller 314 according to information supplied to a signal processor 313 from the optical head 302. Thus, the rotational speed of the information storage medium 10 is maintained at a desired value. Consequently, the disk drive can cope with the information storage medium 10 such as a CD-ROM from which optical information is read at a constant line speed. That is, where the line speed is constant in reading information, the rotational speed is determined by the radial position. Therefore, the rotational speed is maintained constant by moving the optical head 302 into a given position and continuing to read a given track.

Then, the magnetic head 304 is brought into contact with the information storage medium 10 via a magnetic head controller 315, and data is recorded in the magnetic storage portion 13. When the recording of the data is complete, the magnetic head 304 is moved away from the medium 10, thus completing the operation. When data is read from the magnetic storage portion 13, similar operations are performed. Also in this case, an optical drive control mechanism controls the rotational speed of the medium 10 to maintain the line speed of the optical head 302 constant, irrespective of the position of the track, according to information stored in the optical storage portion 12 when information is read from the optical storage portion 12. When information is written to or read from the magnetic storage portion 13, the optical drive control mechanism controls the rotational speed of the medium 10 according to the information stored in the optical storage portion 12 to maintain the line speed of the magnetic head 304 constant, and a magnetic recording is made.

As described above, in the present disk drive 30, the magnetic head 304 is brought into or out of contact with the information storage medium 10. Therefore, if a read-only optical storage disk without the magnetic storage portion 13 is treated, the magnetic head 304 does not contact the read-only optical storage disk. Hence, neither the disk nor the magnetic head 304 is damaged.

In the present disk drive 30, the optical head 302 and the magnetic head 304 are spaced from each other circumferentially such that they do not lie on the same circumference on the disk 10. Therefore, magnetic flux leaking from the objective lens actuator 38 does not affect the magnetic head 304.

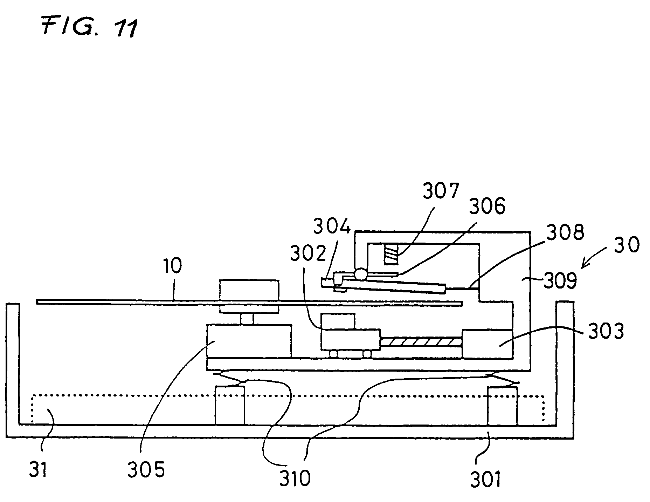

The optical head 302 is operated by a servomechanism so that the spot of the emitted laser beam is kept focused onto the optical storage portion 12 of the information storage medium 10. Accordingly, if external vibration is transmitted to the optical head 302 or to the medium 10, then the function of the servomechanism may get out of order. To prevent this, in the present disk drive 30, the spindle motor 305, the optical head 302, and its optical head drive mechanism 303 are rigidly mounted on a frame 309 which is firmly secured to an outer frame 301 for the disk drive 30 via a vibration-isolation mechanism 310, as shown in Fig. 11. The magnetic head 304 is mounted via the spring mechanism 308 to the vibrationproof frame 309. In this way, the magnetic head 304 vibrates as analogous as possible with the medium 10. Hence, the positional relation between the magnetic head 304 and the magnetic storage portion 13 is not easily spoiled. Thus, the recording position does not shift. Accordingly, after information is written to the magnetic storage portion 13 of the information storage medium 10 by the present disk drive 30, if the medium 10 is read by other disk drive, then the reading can be carried out with certainty. In this way, high compatibility is obtained.

The magnetic head-elevating mechanism 306 is equipped with a damper mechanism filled with unwoven cloth to prevent the magnetic head 304 from making a sudden contact with the information storage medium 10. Therefore, immediately after the magnetic head 304 makes contact with the medium 10, the rotational speed of the spindle motor 305 does not vary. In consequence, writing or reading can be immediately initiated.

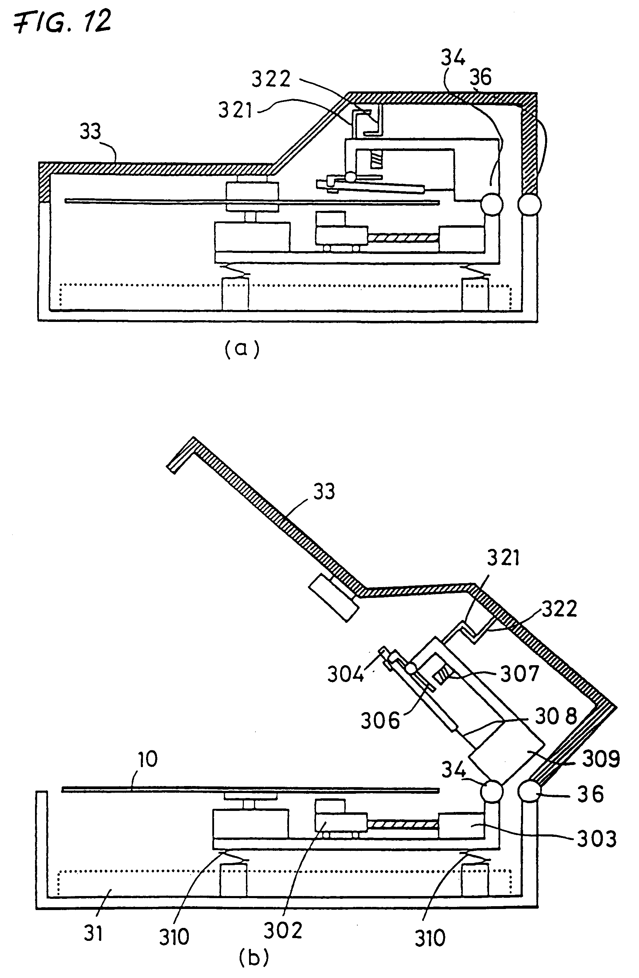

The present disk drive 30 can be designed so that when the information storage medium 10 is loaded or unloaded, an upper cover 33 mounted above the medium 10 is rotated about a hinge 36 and raised, as shown in Fig. 12(b). To prevent the magnetic head 304 from hindering the operation of the medium 10 when it is inserted, hooks 321 and 322 are made to interfere with each other simultaneous with the upward movement of the upper cover 33. The magnetic head 304 is raised about the hinge 34 together with the magnetic head-elevating mechanism 306. When the upper cover 33 is closed, the medium 10 and the upper cover 33 are locked in such a way that they are not in contact with each other, as shown in Fig. 12(a).

### EXAMPLE 8

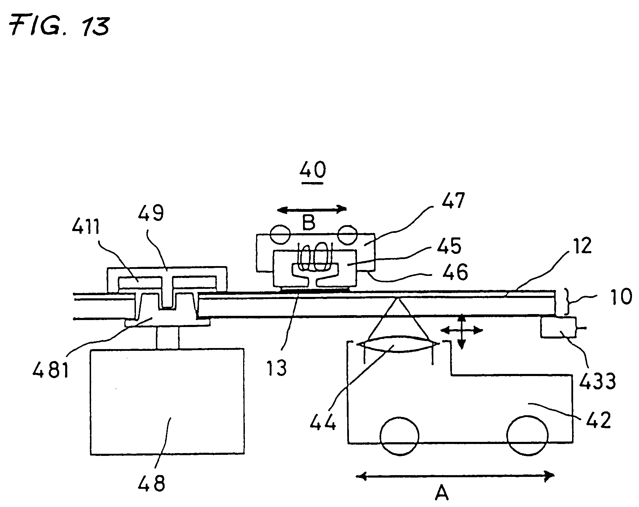

A disk drive forming Example 8 of the invention is described next by referring to Fig. 13. In all of Examples 1-7, the magnetic storage portion of each information storage medium has only one track and so in these information storage media, the magnetic heads are not moved radially of their media. In the present example, the size of the magnetic storage portion is so large that it can accommodate itself to an information storage medium equipped with a magnetic storage portion having as many as, for example, 10 tracks. In the present example, the clamping mechanism for clamping the disk is improved.

Referring still to Fig. 13, the present disk drive, generally indicated by reference numeral 40, is capable of storing and retrieving data from an information storage medium 10 having a read-only optical storage portion 12 and a magnetic storage portion 13 that can be magnetically rewritten. The clamping mechanism for clamping the medium 10 comprises a conic hub 481 for fixedly attaching the medium 10 to a spindle motor 48 and a cap 49. The securing force of this clamping mechanism arises from a magnet 411 mounted inside the cap 49. In this structure of the clamping mechanism, the central hole 14 in the medium 10 is located just above the spindle motor 48. Under this condition, the cap 49 is moved downward. The hub 481 is placed inside the central hole 14 in the medium 10. Thus, the medium 10 is clamped to the motor 48.

In this structure of the disk drive 40, the optical storage portion 12 serves as a ROM. Information is stored in this optical storage portion 12 in the form of pits in the same way as in ordinary CDs. The optical head 42 for reading information from this optical storage portion is connected either with a slide mechanism using bearings or with a moving mechanism utilizing a screw mechanism and can be moved radially of the medium 10 as indicated by the arrow A. Since the track pitch of the optical storage portion 12 has a quite small value of 1.6 µm, fine adjustment of the tracking is made by finely moving an objective lens 44 radially of the medium 10. To cope with vibrations of the face of the medium 10, the objective lens 44 is moved perpendicularly to the medium 10 to bring the lens into focus. These techniques described thus far have been generally used in the conventional optical disk drive for CDs. Also in the present disk drive 40, the optical information reading control mechanism controls the rotational speed of the medium 10 to maintain constant the scanning line speed of the light read from the optical head 42 (i.e., the CLV method) according to the information stored in the optical storage portion 12, irrespective of the position of the track when information is retrieved from the optical storage portion 12. When information is written or read to or from the magnetic storage portion 13, the aforementioned optical information reading control mechanism controls the operation of the magnetic head 45 according to the information stored in the optical storage portion 12 to store and retrieve information by the CLV method.

In the present disk drive 40, the magnetic head 45 is flexibly mounted to a carriage 47 via a resilient gimbal 46 so that the head 45 certainly responds to vibrations of the face of the medium 10 and makes intimate contact with the magnetic storage portion 13 formed on the surface of the medium 10. The carriage 47 moves linearly radially of the medium 10. In particular, the magnetic head 45 is moved horizontally as indicated by the arrow B while pressed against the storage medium 10 by the resilience of the gimbal 46, and writes information to plural tracks. In order that the magnetic head 45 touch the medium 10 with improved reliability, the load imposed on the spindle motor 48 increases slightly. If necessary, rollers 433 may be mounted on the outer periphery of the storage medium 10.

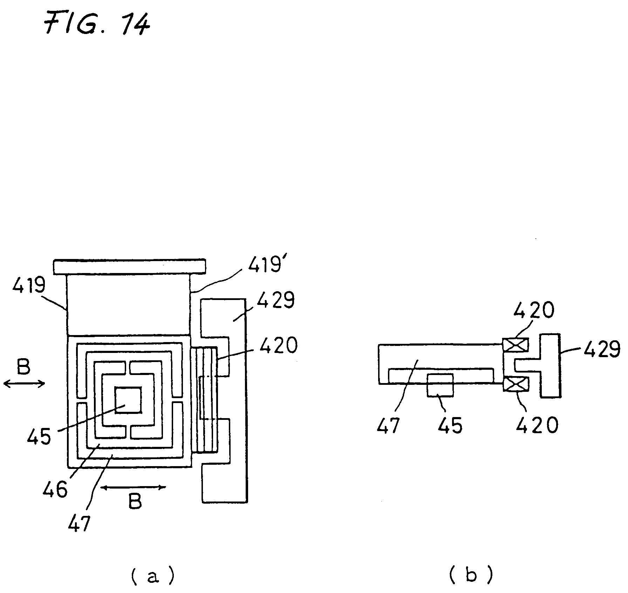

As shown in Fig. 14, (a) and (b), the above-described mechanism for moving the magnetic head 45 has the carriage 47 that supports the head 45 via the gimbal 46. This carriage 47 is held to two leaf springs 419 and 419'. A coil 420 is mounted cylindrically around the carriage 47 and arranged coaxially with a magnetic circuit 429. An electrical current passed through the coil 420 produces a driving force which acts on the carriage 47 horizontally in the direction indicated by the arrow B. The leaf springs 419 and 419' are caused to bend, and the magnetic head 45 moves across the magnetic storage portion 13.

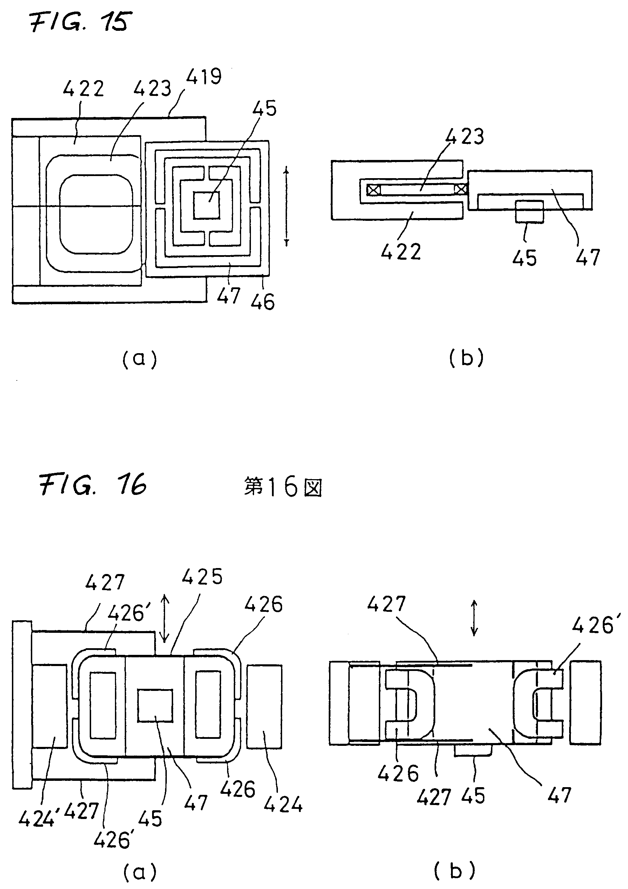

As shown in Fig. 15, (a) and (b), a driving force that drives the magnetic head 45 (or the carriage 47) horizontally can also be produced by forming a gap inside a magnetic circuit 422, setting the senses of the produced magnetic fields at two opposite walls in such a way that they are opposite, and inserting a coil 423 horizontally into the gap. The coil 423 is mounted on the side of the carriage 47 which holds the magnetic head 45 via the gimbal 46.

As shown in Fig. 16, (a) and (b), where a solenoid actuator is used to move the magnetic head 45 horizontally, a mechanism for moving the magnetic head vertically can be imparted to the actuator itself. More specifically, the carriage 47 to which the magnetic head 45 is mounted is supported by four wires 427. Magnetic circuits 424 and 424' are arranged parallel to and outside the coil 425 and coils 426 and 426' located at the four corners, the coil 425 being mounted on the side of the carriage 47. When the head is moved horizontally by the solenoid actuator, the wires 427 bend horizontally. When the magnetic circuits 424 and 424' apply a force to the carriage 47 vertically to the coil 425 and parallel to the coil 425 and to the coils 426, 426' at the four corners, the wires 427 bend vertically. Therefore, the degree of intimateness with which the magnetic head 45 makes contact with the storage medium 10 can be adjusted by using the fact that the wires 427 can bend either vertically and horizontally.

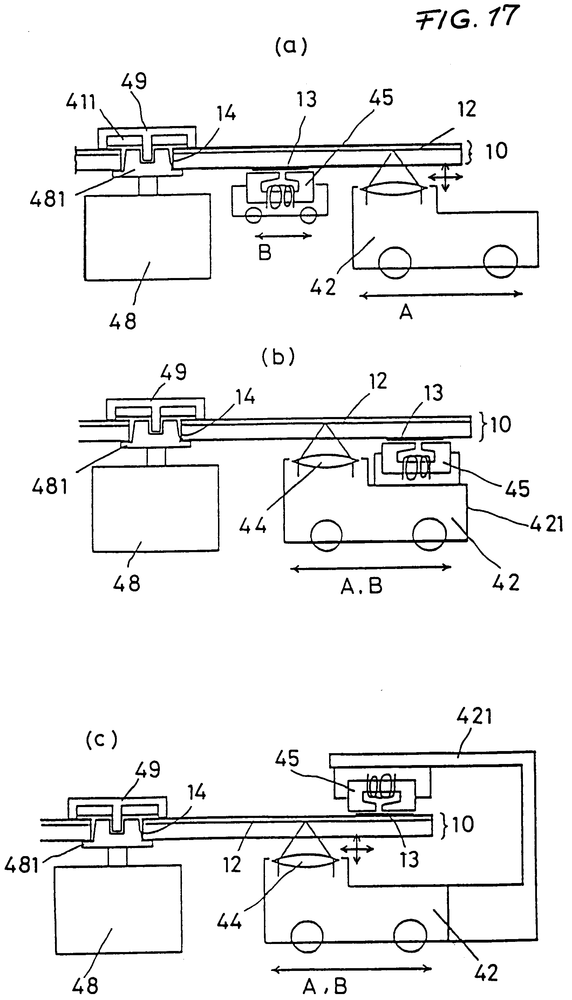

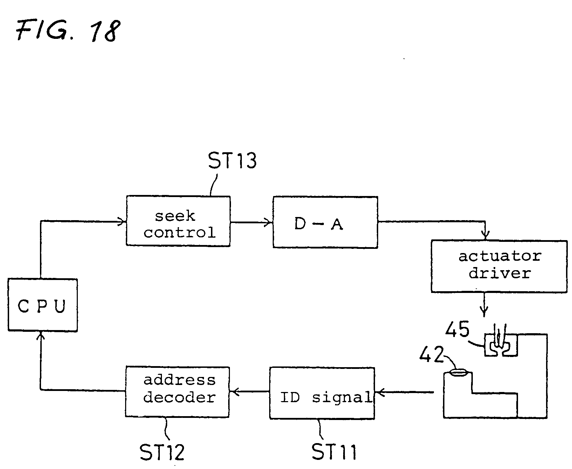

Where both optical storage portion 12 and magnetic storage portion 13 are formed on the same side of the information storage medium 10, both optical head 42 and magnetic head 45 can be disposed on the same side of the medium 10, as shown in Fig. 17(a), where those components which corresponds to their counterparts of the present disk drive 40 are denoted by like reference numerals. In this case, as shown in Fig. 17(b), the magnetic head 45 can be mounted to a chassis 421 for the optical head 42. Where the optical storage portion 12 and the magnetic storage portion 13 are formed on opposite sides of the information storage medium 10, in order to fabricate the optical head 42 and the magnetic head 45 integrally, the chassis 421 for the optical head 42 is bent from the rear side to the front side of the medium 10, and the chassis 421 is mounted to the magnetic head 45 on the side of the front surface of the medium, as shown in Fig. 17(c). Where the optical head 42 and the magnetic head 45 are fabricated integrally in this way, they can be moved as a unit and so the driving system is simplified. Furthermore, addresses stored in the magnetic storage portion 13 are read by the optical head 42, and the magnetic head 45 is moved according to the retrieved addresses, by making use of the fact that the track pitch of the magnetic storage portion 13 is about 100 times as large as the track pitch of the optical storage portion 12. Consequently, the accuracy with which the magnetic head 45 locates the track position is improved. Specifically, as illustrated in Fig. 18, when a magnetic recording is made, the optical head 42 reads an optical identification (ID) signal from the optical storage portion 12 of the information storage medium 10 (step ST11). The ID signal is decoded into an address signal (step ST12). In step ST13, the CPU instructs the actuator driver to seek for the magnetic storage portion. In this way, the magnetic head 45 is controlled.

In the disk drive 40 constructed in this way, if the CPU receives an instruction to write information to the magnetic storage portion 13, the optical head 42 moves into a given position and then pauses. The spindle motor 48 is controlled according to the optical information obtained from the optical pickup of the optical head 42, and the rotational speed of the medium 10 is maintained at a given value. More specifically, where reading is done at a constant line speed, the rotational speed is determined by the radial position. Then, the optical head 42 is moved into a given position, and a given track continues to be read out. As a result, the rotational speed is maintained constant. The magnetic head 45 writes data while in contact with the medium 10. When the writing is complete, the magnetic head 45 moves away from the medium 10. Therefore, also in the present disk drive 40, the magnetic head 45 can be brought into and out of contact with the storage medium 10. Consequently, even when a read-only optical storage medium not having the magnetic storage portion 13 is treated, the magnetic head 45 does not touch the read-only optical storage disk. This prevents both disk and magnetic head 45 from becoming damaged.

### EXAMPLE 9

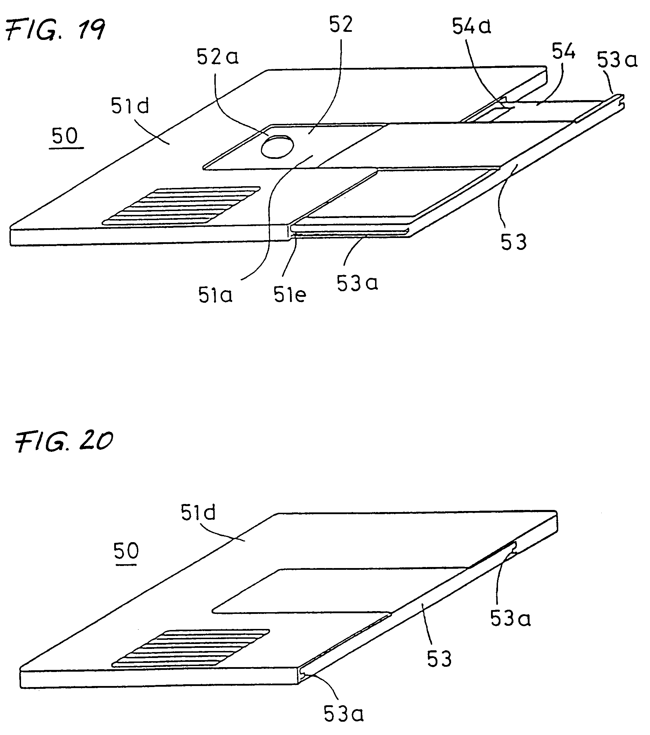

An information storage medium forming Example 9 of the present invention is described next by referring to Figs. 19-23. The present disk drive is different from a single disk drive having both magnetic storage portion and magnetic storage portion. Rather, an optical storage disk and a magnetic storage disk are enclosed in a cartridge, which constitutes an information storage medium.

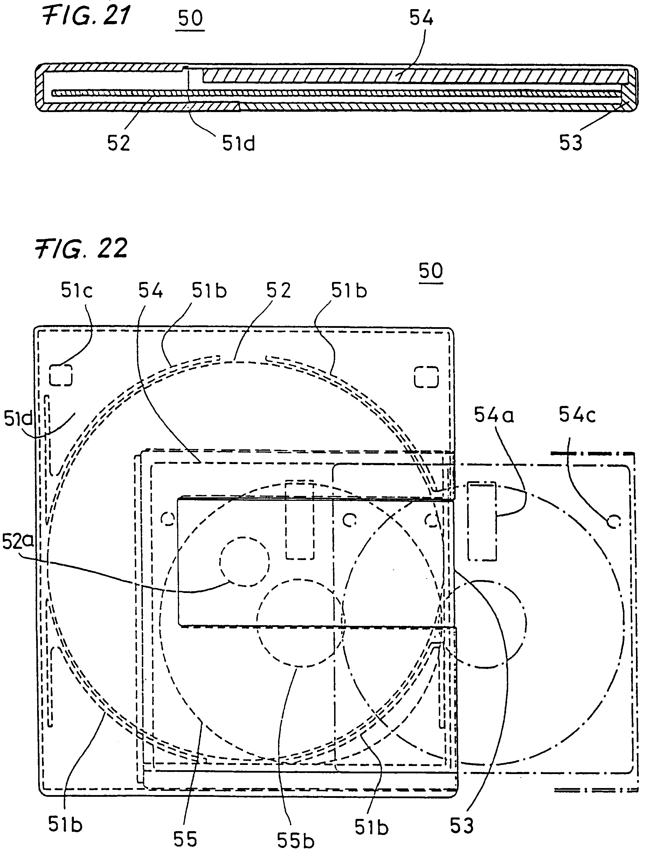

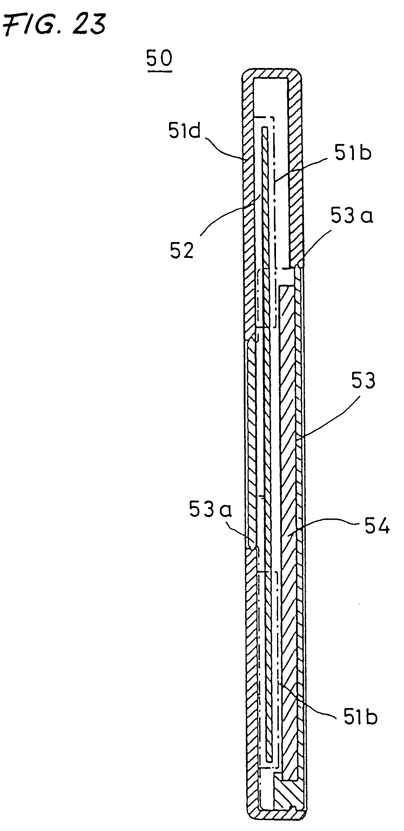

Fig. 19 is a perspective view of a disk cartridge accommodating an optical storage disk which is known as a read-only disk, and in which the shutter of the cartridge is open. Fig. 20 is a view similar to Fig. 19, but in which the shutter has been closed after the use of the cartridge. Fig. 21 is a vertical cross section of the disk cartridge. Fig. 22 is a plan view of the cartridge. Fig. 23 is a vertical cross section of the cartridge.

In these figures, the present disk cartridge, or an information storage medium, is generally indicated by reference numeral 50 and has a first resinous case 51d accommodating a read-only optical storage disk 52, or a first disk. The first case 51d is composed of a front casing and a rear casing. The optical storage disk 52 is inserted in the space between these two casings. This disk cartridge 50 has a shutter 53 for opening and closing an opening 51a in the first case 51d. This shutter 53 is provided with two grooves 53a alongside the first case 51d. The grooves act to guide the first case 51d. The first case 51d has rails 51e engaged in the grooves 53a. As shown in Figs. 21 and 23, a second case 54 receiving a magnetic storage disk 55 consisting of a 3.5 inch-floppy disk is nested in the shutter 53. When the shutter 53 is moved to open or close the opening 51a, the second case 54 moves in the same direction. The second case 54 is provided with an opening 54a to permit the magnetic head to have access to the magnetic storage disk 55. This opening 54a is usually closed by a shutter (not shown) mounted on the case 54. The shutter is made to engage a part of the first case 51d so that the opening 54a is opened and closed in synchronism with the operation of the shutter 53 to open the case 51d. Therefore, when the shutter 53 shown in Figs. 19 and 22 operates to open the first case 51d, the shutter (not shown) on the second case 54 opens the opening 54a in the second case 54. The opening 54a in the case 54 is located outside the first case 51d by the movement of the shutter 53. As shown in Fig. 19, the opening 51a is formed in the front surface of the case 51d. After the movement of the shutter 53, the central hole 52a in the optical storage disk 52 is exposed through this opening 51a. As shown in Fig. 22, a vertically extending opening is formed on the rear side of the case 51d by the movement of the shutter 53.

In this way, the optical storage disk 52 accommodated in the first case 51d is exposed through both openings formed on the front side and the rear side, respectively, in the first case 51d. Therefore, the optical storage disk 52 is clamped to its both sides vertically on a turntable driven by a spindle motor of a well-known CD player, CD drive, or the like. Thus, the disk 52 can be rotated. The optical head can gain access to the disk via the vertically extending opening on the rear side.

On the other hand, the second case 54 for the magnetic storage disk 55 is housed in the shutter 53. The shutter 53 is provided with a cutout opposite to the opening 54a. The shutter 53 is further formed with a cutout opposite to a clamping portion 55b of the magnetic storage disk 55 enclosed in the case 54. Therefore, when the shutter 53 moves either into the position shown in Fig. 19 or into the position indicated by the phantom line in Fig. 22, the shutter (not shown) on the second case 54 accommodating the disk 55 is opened as mentioned above. In consequence, the magnetic storage disk 55 is also exposed through the opening 54a and through the cutouts in the shutter 53. As a result, the disk 55 is loaded such that the disk 55 and the clamping means 55b, or the central hole, are exposed at given positions. Simultaneously with the loading, the clamping means 55b of the disk 55 is clamped to the turntable (not shown) through the cutout. The disk 55 is fully exposed through the cutouts and the openings 54a on both sides. Under this condition, the disk drive can read and write information to and from the disk 55.

When the disk cartridge 50 described above is not loaded into the disk drive, the cartridge hardly differs in appearance from an ordinary disk cartridge accommodating a single disk, as shown in Fig. 22. However, when the disk cartridge 50 is loaded into the disk player or the disk drive, the shutter-driving means of the player or of the drive opens the shutter 53 up to the condition shown in Fig. 19. Under this condition, the cartridge 50 approaches the aforementioned spindle motor in a manner well known in the art, and the optical storage disk 52 and the magnetic storage disk 55 are clamped to their respective spindle motors of the player or of the drive.

It is necessary that the first case 51d and the second case 54 be placed in position accurately in the player or drive. Variations in the components of the player or drive and variations in the various portions of the first case 51d and the second case 54 disturb the control over the positions, thus deteriorating the accuracy of the positioning. Accordingly, in the present example, to avoid these problems, a positioning stabilization mechanism is adopted. In particular, when the first case 51d and the second case 54 are in the condition shown in Fig. 20, the dimensional tolerances between the rails 51e on the first case 51d and the guide grooves 53a in the shutter 53 are very strict. When the shutter 53 moves and takes the condition shown in Fig. 19 so as to open the openings, the dimensional tolerances between the rails 51e and the guide grooves 53a in the shutter 53 are increased both vertically (in the direction of the thickness of the case) and horizontally (perpendicularly to the direction in which the shutter 53 moves). Therefore, the shutter 53 and the second case 54 can move only small distances vertically and horizontally relative to the first case 51d. The distance in the direction in which the shutter 53 moves can be adjusted by adjusting the stroke of the shutter. The guide holes 51c formed in the case place the first case 51d in its optimum position relative to the player for the optical storage disk 52. The guide holes 54c formed in the second case 54 place this case in its optimum position relative to the drive for the magnetic storage disk 55. During these positioning operations, if the positioning elements for the cases produce slight deviations due to variations of the components, these deviations are absorbed by the dimensional tolerances. The optical storage disk 52 and the magnetic storage disk 55 are clamped to their respective spindle motors of the player or the drive. Appropriate gaps are secured between the optical storage disk 52 and the cartridge and between the magnetic storage disk 55 and the cartridge. Consequently, the disks 52 and 55 can rotate without interfering with each other.

Information can be written and read to and from these disks under instructions from the player or drive. These writing and reading are performed separately for each disk or in cooperation.

As described thus far, in the present information storage medium 50, the optical storage disk 52 and the magnetic storage disk 55 are loaded in the cartridge. Therefore, after information is retrieved from the optical storage disk 52 and calculations are performed by a CPU included in a personal computer, game machine, or the like, the results of the processing can be recorded in the magnetic storage disk 55 if necessary. For example, these data can be combined with data entered to the personal computer or game machine from the outside. If the operation of a game machine is interrupted, information about the interrupted condition is temporarily stored in the magnetic storage disk 55. When the operation is resumed, the information is read out, and the game can be resumed from the interrupted condition. As shown in Fig. 22, the disk cartridge 50 is provided with the opening 51a extending horizontally in the front surface. The cartridge is provided with an opening 54a in its rear surface, the opening 54a extending perpendicularly to the opening 51a. In this way, these two openings 51a and 54a extend in different directions. Therefore, the disk drive for use with the present disk cartridge 50, or information storage medium, is required to have both an optical reader mechanism and a magnetic drive mechanism. Since the openings permitting their heads to have access to the disks extend in different directions, less strict restrictions are imposed on the planes on which the head of the optical reader mechanism and the head of the magnetic drive mechanism are mounted, respectively. Hence, the internal structure of the disk drive can be simplified.

The second case 54 accommodating the magnetic storage disk 55 is received in the disk cartridge 50, together with the optical storage disk 52. The present invention is not limited to this structure. For instance, the following structure can also be used. As shown in Fig. 22, the inside of the shutter 53 is shaped into a boxlike form. The magnetic storage disk 55 from which the second case 54 has been removed is placed inside the boxlike space in the shutter with slight dimensional tolerances. When the shutter is opened or closed, the magnetic storage disk 55 is moved out of this position as the shutter 53 moves. The result is that the head and the spindle motor of a floppy disk drive or the like can be placed without interfering with the first case 51d or with the head or the spindle motor for the magnetic storage disk.

The width of the shutter 53 can be extended to the full width of the first case 51d shown in Fig. 22. The shutter 53 is moved beyond the position indicated by the phantom line in Fig. 22 in opening the opening. In this way, the shutter 53 can be removed from the case 51d. If the shutter 53 is removed together with the second case 54 from the case 51d, a hole is formed in one side surface of the first case 51d. The optical storage disk 52 is caused to slide through this side hole and removed. Then, an optical storage disk storing other information is loaded. Thereafter, operations opposite to the foregoing are performed. That is, the shutter 53 mounted to the first case 51d is again mounted and used. Then, processing can be performed with a combination of disks different from the combination used heretofore. In this case, the shutter 53 is not detached from the first case 51d but moved an appropriate distance to permit replacement of the optical storage disk 52. The replaced disk is not restricted to the optical storage disk 52. The magnetic storage disk 55 can be a replaceable one.

### EXAMPLE 10

The structure of a disk drive which can be used with the information storage medium (disk cartridge) comprising the first and second disks (the optical storage disk and the magnetic storage disk) constructed as described above is described below.

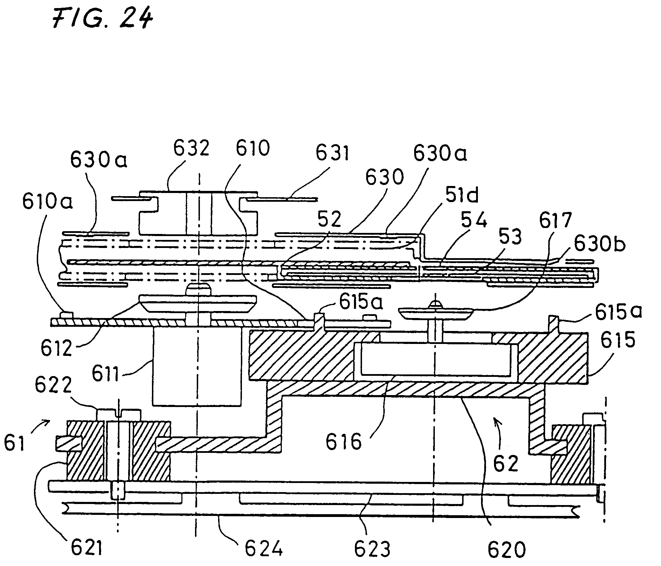

Fig. 24 is a side elevation in cross section of the present disk drive. This figure shows the condition in which the disk cartridge has been inserted in the disk drive before the disks in the first and second cases within the disk cartridge are clamped to the spindle motors mounted in the disk drive.

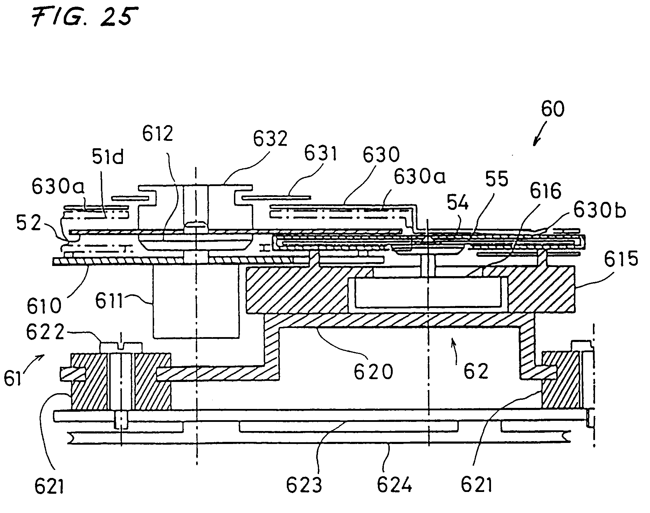

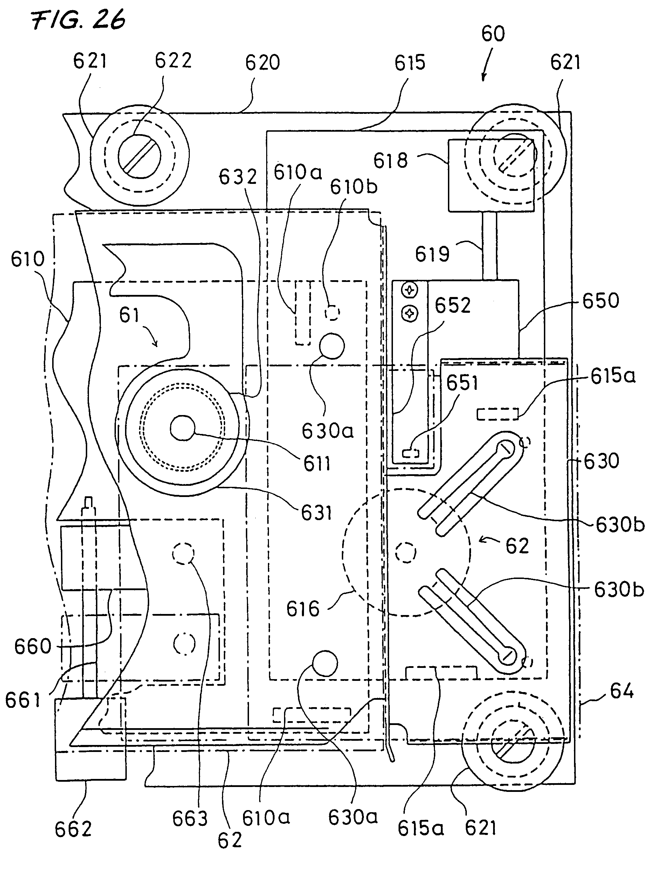

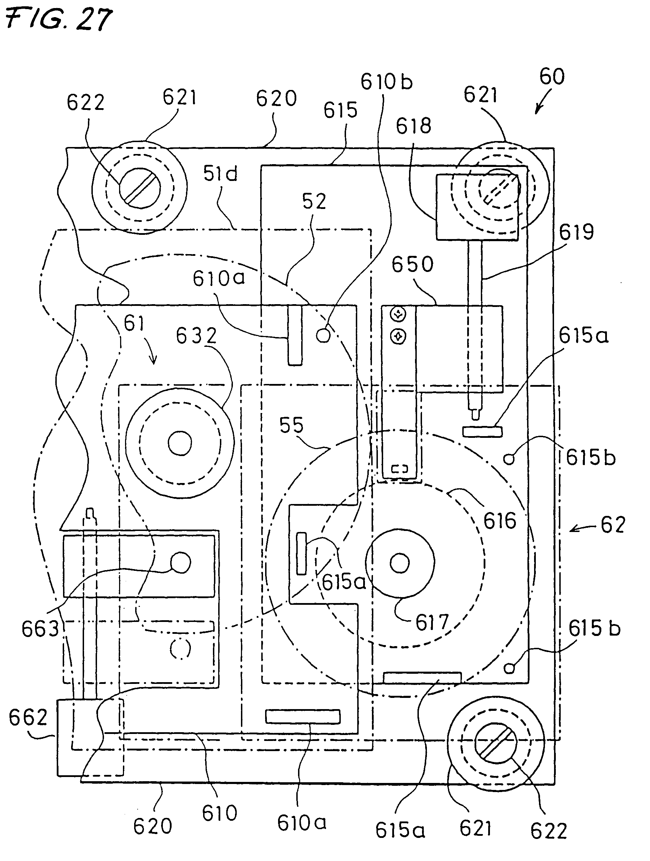

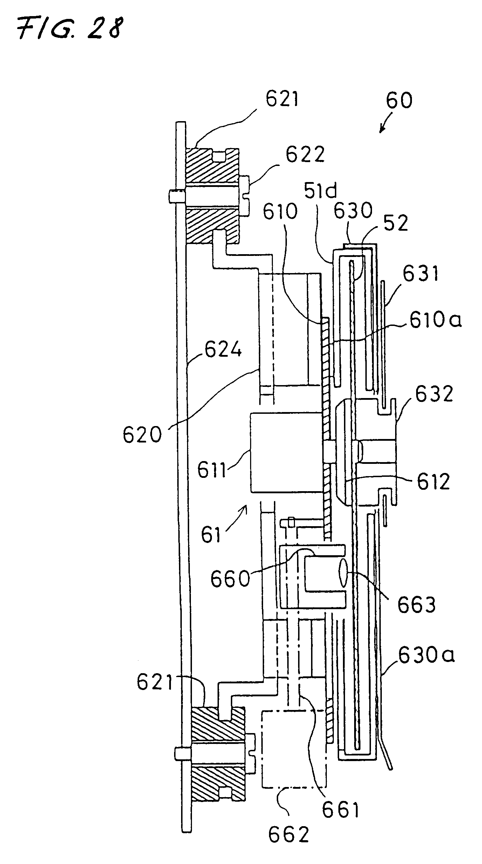

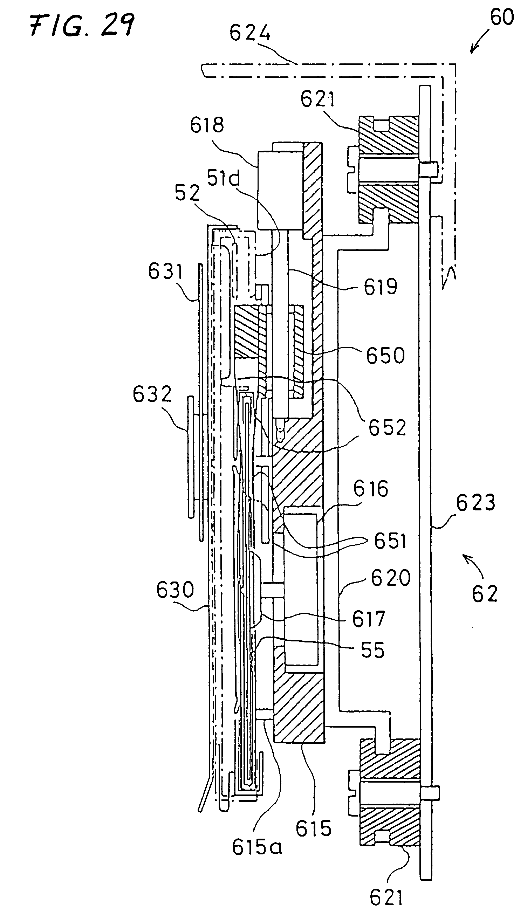

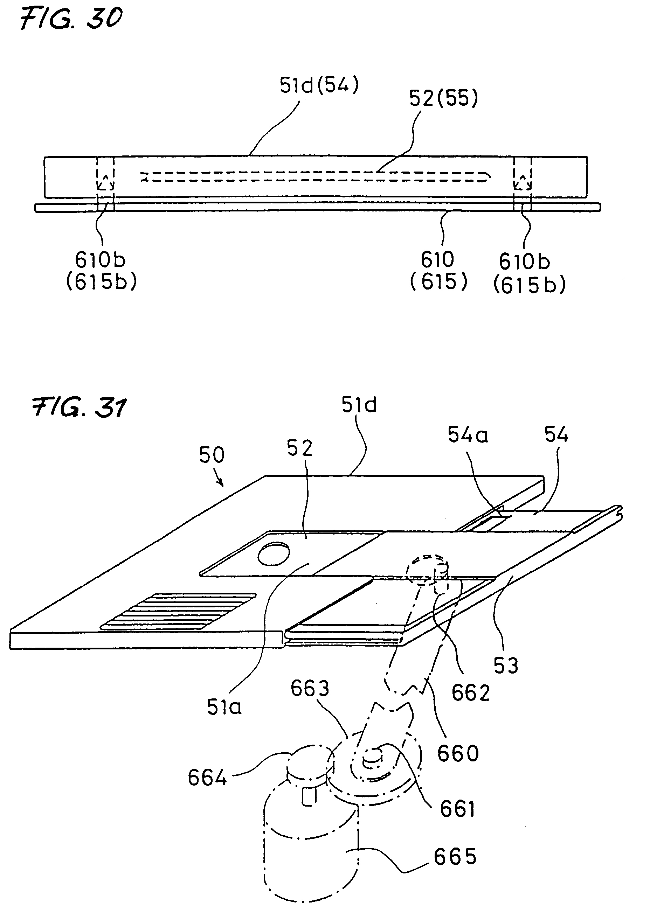

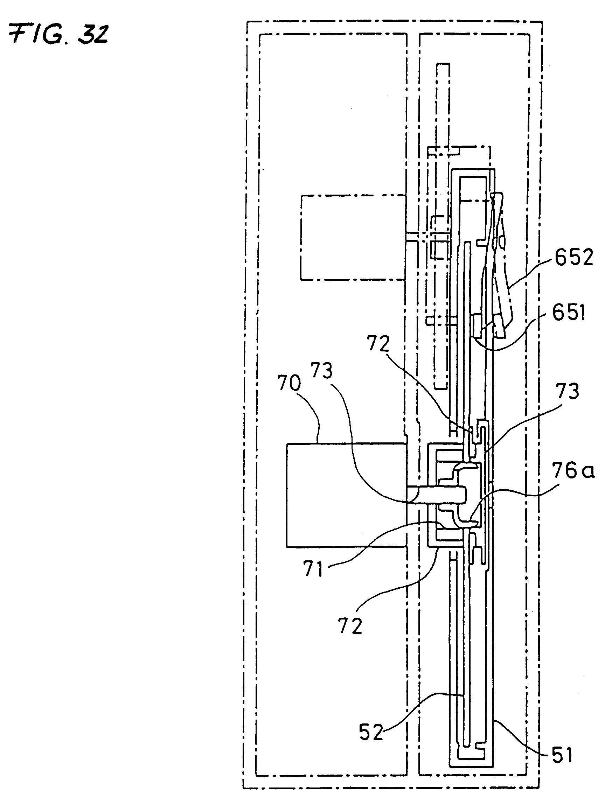

Fig. 25 is a side elevation in cross section of the disk drive, showing the condition in which the disk cartridge has been lowered from the position shown in Fig. 24 and the optical storage disk and the magnetic storage disk accommodated in the cartridge have been clamped to the spindle motors. Fig. 26 is a fragmentary plan view of the disk drive as viewed from above the drive. Fig. 27 is a view similar to Fig. 26, but the holder has been removed. Fig. 28 is a side elevation in cross section of a CD unit, taken along a substantially vertical line passing through the center of the spindle motor of the optical reader mechanism, and in which the optical storage disk has been clamped to the spindle motor. Fig. 29 is a side elevation in cross section of the disk drive shown in Fig. 26, taken along a substantially vertical line passing through the center of the spindle motor of the magnetic drive mechanism. Fig. 30 shows the condition in which the first case or the second case forming the disk cartridge has been fully loaded in the corresponding unit after being guided by guide pins on the first or second chassis. Fig. 31 is a perspective view of the disk drive, showing the condition in which the disk cartridge is loaded into the present disk drive.

In these figures, the information storage medium for use with the present disk drive, generally indicated by reference numeral 60, is the disk cartridge 50 of Example 9. Of the two kinds of disks accommodated in the cartridge 50, the optical storage disk 52, or the first disk, that is a read-only optical storage disk or CD is accommodated in the first case 51d, while the magnetically accessible magnetic storage disk 55, or the second disk, is received in the second case 54 which is movably or detachably mounted to the first case 51d. The magnetic storage disk 55 functions similarly to an ordinary floppy disk. The second case 54 is detachably attached to the shutter 53 which is mounted on the side of the first case 51d.

The disk drive 60 for use with the disk cartridge 50 having the fundamental structure described above has a first chassis 610. When the first case 51d and the second case 54 are together inserted as the disk cartridge 50 into the disk drive 60, guide pins 610b of the first chassis 610 can guide the first case 51d. Also mounted on the first chassis 610 are a spindle motor 611 for clamping the optical storage disk 52 received in the first case 51d and for rotating the disk, an optical head 660 equipped with an objective lens 663 acting optically, a seeking motor 662 for linearly reciprocating the optical head 660 radially of the optical storage disk 52, and a feed screw 661 connected with the output shaft of the motor 662. The optical head 660 is connected with a screw mechanism via the feed screw 661. Furthermore, the first chassis 610 has guide protrusions 610a for placing the first case 51d in position relative to the first chassis 610 in the direction of the height when the optical storage disk 52 accommodated in the first case 51d is mounted on a turntable 612 driven by the spindle motor 611. These first chassis 610, optical head 660, spindle motor 611, and their ancillary elements together form a CD unit 61, or an optical reader unit.

A spindle motor 616 and a magnetic head 651 for magnetically writing and reading information to and from the magnetic storage disk 55 are mounted on the second chassis 615. This head 651 is mounted to a carriage 650 via a head spring 652 and can perform a seeking operation radially of the magnetic storage disk 55. A feed screw 619 connected with the output shaft of a seeking motor 618 is connected with the carriage 650, the motor 618 acting as a power source for the seeking operation. As shown in Fig. 30, the second chassis 615 has positioning protrusions 615a and guide pins 615b. When the magnetic storage disk 55 is installed on the turntable 617 driven by the spindle motor 616, the positioning protrusions 615a place the second case 54 in position relative to the turntable 617 in the direction of the height. The guide pins 615b place the second case 54 in position relative to the turntable along the plane of the case 54. These second chassis 615, spindle motor 616, magnetic head 651, seeking motor 618, and their ancillary parts together form a floppy disk unit 62, or a magnetic drive unit. The openings 51a and 54a formed in the disk cartridge 50 for head access extend in different directions and, therefore, in the present disk drive 60, the optical head 660 of the CD unit 61 and the magnetic head 651 of the floppy disk unit 62 are spaced from each other as shown in Fig. 26.

In the disk drive 60 constructed in this way, the disk cartridge 50 contains the optical storage disk 52 that is a read-only optical storage disk and the magnetic storage disk 55 for magnetically writing and reading information. When the cartridge 50 is inserted into a holder 630 of a main chassis 620 of the disk drive 60 from the side of the front end shown in Fig. 20 and from the lower side as viewed in Fig. 26, the holder 630 is spaced from the floppy disk unit 61 and from the floppy disk unit 62 in the direction of height. The first case 51d is inserted without interfering either with the top of the spindle motor 611 of the CD unit 61 or with the top of the spindle motor 616 of the floppy disk unit 62. In the final stage of this insertion operation, a lever 660 for moving the shutter 53 engages a hole formed in the rear surface of the shutter 53 of the first case 51d, so that power is transmitted to all of a cartridge-pulling motor 665, a pinion 664 mounted to the motor 665, and a gear 663 rigidly mounted to the lever 660. The lever 660 is rotated to the right about a pin 661 relative to the holder 630. This rotation pulls the second case 54 out of the first case 51d together with the shutter 53, as shown in Figs. 19 and 31, the second case 54 being installed inside the shutter 53 of the first case 51d and accommodating the magnetic storage disk 55. These operations are performed inside the holder 630. The pulled condition is shown in Figs. 19 and 31.

When the pulling operation is completed, the opening formed in the rear surface for the turntable 612 driven by the spindle motor 611 is located opposite to the turntable 612 or the optical head 660, the opening being closed by the shutter 53. As shown in Figs. 19 and 31, the upper side of the first case 51d is opened by movement of the shutter 53. The opening 51a forms a space receiving a clamping member 632 which magnetically attracts the turntable 612 and clamps the optical storage disk 52.

On the other hand, during the pulling operation, the shutter 53 forming the second case 54 is moved, so that the opening 54a (Figs. 19 and 22) in the second case 54 is exposed through the first case 51d. The shutter 53 and the rear surface of the second case 54 are provided with openings aligning with the opening 54a. Under this condition, both front and rear surfaces of the magnetic storage disk 55 are exposed from the second case 54. An opening for receiving the turntable 617 driven by the spindle 616 of the floppy disk unit 62 is exposed at the rear surface of the second case 54. This opening is opposite to all of the magnetic head 651, the head spring 652, and the turntable 617.

Under this condition, the holder 630 is moved downward into the position shown in Fig. 25. During this operation, the optical storage disk 52 is placed in position within the plane of the spindle motor 616 and placed in position in the direction of height. Further downward movement of the holder lowers the lever 631, and the holder is clamped by the clamping member 632. At the same time, as shown in Fig. 30, the guide holes 51c in the first case 51d come into engagement with two positioning pins 610b fixedly mounted to the first chassis 610 of the CD unit 61. As a result, the first case 51d is held in two dimensions to the CD unit 61. As shown in Figs. 24-28, the first case 51d is guided by the guide protrusions 610a formed on the first chassis 610 and held horizontal. An adequate gap is secured between the first case 51d and the optical storage disk 52. The disk 52 is positioned inside the first case 51d without interfering with the inner surface of the first case 51d both along said plane and in the direction of height. The optical storage disk 52 is then rotated by the spindle motor 611 via the turntable 612.

The downward movement of the holder 630 moves the second case 54 downward toward the floppy disk unit 62. This forces the turntable 617 into the opening in the rear surface of the second case 54, as shown in Figs. 25 and 29. The turntable 617 is magnetically attracted to the rear surface of the magnetic storage disk 55 and engages it, thus determining the height of the disk 55. As the second case 54 moves downward, the magnetic head 651 and the head spring 652 mounted to the head operate from their conditions in which they were opened upward and downward, respectively. As shown in Figs. 26 and 29, they come into contact with the disk 55 from its both sides, whereby the disk 55 is sandwiched between them.

Under this condition, the spindle motors 611 and 616 turn to thereby rotate the turntables 612 and 617, thus rotating the optical storage disk 52 on the turntable 612 and the magnetic storage disk 55 on the turntable 617. The optical head 660 of the CD unit 61 and the magnetic head 651 of the floppy disk unit 62 act on the optical storage disk 52 and the magnetic storage disk 55, respectively, and read information from the optical storage disk 52. Then, processing of a game or the like is made to progress according to the information. As the processing progresses, necessary information is magnetically recorded in the magnetic storage disk 55 if necessary. When it is necessary to interrupt a game, the user can restart it from the interrupted condition, provided that conditions necessary for restart of the game are previously written to the disk 55 under instructions from a control circuit.

In the present example, the CD unit 61 and the floppy disk unit 62 are mounted adjacent to each other on the main chassis 620. Shock-absorbing means 621, for example, consisting of rubber are disposed at plural locations on the main chassis 620. These shock-absorbing means 621 are rigidly mounted to a case rear plate 623 by screws 622, the rear plate 623 being connected to a case 624 for the disk drive 60.

As described thus far, in the present disk drive 60, a CD having a larger storage capacity than a semiconductor ROM can be utilized without combining a semiconductor ROM and a semiconductor RAM. Also, a magnetic disk having a larger storage capacity than a semiconductor ROM can be employed. Hence, the cost per unit storage capacity is reduced. Although there exist two disks, they are enclosed in the single disk cartridge 50, which can be used as an information storage medium. Therefore, it is easy for the user to handle. Furthermore, a mechanism for automatically drawing the second case 54 from the first case 51d is provided. It is not necessary for the user to manually perform the drawing operation. Hence, the disk drive can be conveniently used.

Since the main chassis 620 is equipped with the shock-absorbing means 621, external vibrations and shock are less likely to be transmitted to the chassis than when each unit is installed separately. Furthermore, only 1 set of shock-absorbing means is provided and so the number of locations at which the shock-absorbing means 621 are mounted can be reduced. Especially, where only one set of shock-absorbing means 621 is provided, each unit swings in the same direction as the loading mechanism by the same amount. Therefore, neither the optical storage disk 52 nor the magnetic storage disk 55 is unclamped. Also, the components are prevented from getting damaged. Consequently, the disk drive 60 can be simplified in structure.

The mechanism for clamping the spindle motor 611 to the optical storage disk 52 can perform a clamping operation more reliably by using the following structure.

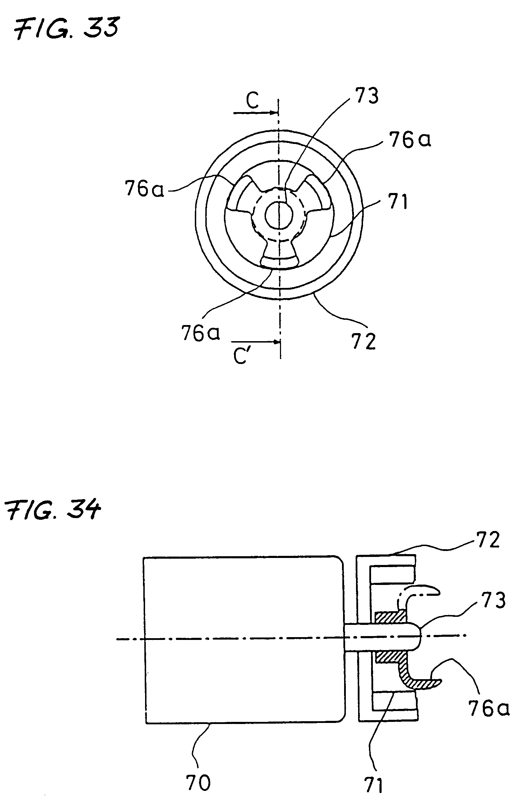

Fig. 32 is a cross-sectional view of the spindle motor of the disk drive, showing the surroundings of the spindle motor. Fig. 33 is a plan view of the spindle motor. Fig. 34 is a cross-sectional view taken along line C-C' of Fig. 33.

In these figures, three claws 76a are disposed coaxially with the spindle 73 at the side of the front end of the spindle 73 of the spindle motor 70 and resiliently engage the central hole in the optical storage disk 52. Therefore, when the optical storage disk 52 having the above-described magnetic storage portion and accommodated in the disk cartridge 51 loaded in the disk drive is exposed from the cartridge 51, the disk 52 moves downward, and its central hole comes into engagement with the claws 76a. Since the diameter of the circle circumscribing the claws 76a is set somewhat larger than the inside diameter of the central hole in the optical storage disk 52, automatic engagement is not attained under this condition. However, when the disk 52 moves a given distance downwardly, a guide plate or clamping member 73 moves downward from above the disk 52, urging the disk 52 downward. Therefore, all the claws 76a bend inwardly to the same extent. The result is that the claws 76a engage the central hole in the optical storage disk 52 without play. A board 72 mounted inside the disk cartridge 51 is attracted to a permanent magnet 71 fixedly mounted inside the turntable 72 driven by the spindle 73. This assures that the optical storage disk 52 is held at the front end of the spindle 73 and can be rotated with the turntable 72 while maintained in engagement with the claws 76a. In the foregoing description, the above-described connecting means is located on the side of the spindle motor. This connecting means may also be mounted in the central hole in the information storage medium. In Fig. 32, indicated by 651 is a magnetic head. The head spring 652 connects together the head 651 and the carriage 650. Reading with the optical head and writing and reading with the magnetic head can be accomplished with high reliability.

The various components of the information storage media and the disk drives forming Examples 1-10 described above can be combined. Where two rotation driving systems are needed for optical reading and for magnetic reading, respectively, for rotation relative to an information storage medium as in the disk drive of Example 10, one spindle motor can be used for the two driving systems.

### Industrial Applicability

As described thus far, in the present example, a read-only optical storage portion and a magnetic storage portion permitting both writing and reading are both formed on one information storage medium. In consequence, an information storage medium having both an optical storage portion of a large storage capacity and a magnetic storage portion capable of both writing and reading can be accomplished.

Where the magnetic storage portion is formed on the surface of a magnetic storage disk, a rewritable information storage medium having a large storage capacity can be realized by a single disk. Furthermore, this medium is compatible with the conventional optical storage disk. Where a region in which certain data indicating that the magnetic storage portion exists is formed in the optical storage portion, no problems occur if this medium is treated in the same way as the conventional optical storage media because it is possible to detect the presence of the magnetic storage portion. In manufacturing this information storage medium, if the magnetic storage portion is formed by using an optical storage disk as a base and bonding tape or the like containing a magnetic material to the base, then the prior art steps for manufacturing conventional optical storage disks can be utilized directly. In addition, the medium can be fabricated easily without spoiling the functions of the optical storage disk.

Where the information storage medium has an outer case enclosing the body of the medium on which the magnetic and optical storage portions are formed, the outer case is provided with openings permitting the heads to have access to the magnetic and optical storage portions. If these openings are spaced from each other circumferentially of the body of the medium, magnetic flux leaking from the optical head less affects the magnetic head. Consequently, highly reliable operation can be realized.

This information storage medium writes and reads information to and from the magnetic storage portion of the medium while controlling the rotation of the medium having the optical storage portion as well according to optical information read from the medium. Therefore, the present invention can be applied to cases where optically stored information is read by the CLV method, the CAV method, or a more complex method. To increase the storage capacity of the magnetic storage portion, it is possible to move the optical head across every track of the magnetic storage portion which has an optical storage portion of the CLV system as well as plural tracks. The storage capacity is varied from track to track.

Where an information storage medium in the form of a cartridge incorporating a first disk forming an optical storage portion and a second disk forming a magnetic storage portion is constructed, an information storage medium and a drive unit can be constituted by using the prior art writing and reading techniques directly. This is economically advantageous. Furthermore, compatibility with the prior art cartridge-type information storage medium can be easily secured. Where the openings formed in the cartridge to permit the heads to gain access to the magnetic storage disk and the optical storage disk, respectively, are made to extend in different directions, less strict restrictions are imposed on the arrangement of the magnetic head and the optical head. Consequently, the drive unit can be designed with higher degree of freedom.

## Claims

1. An information storage medium comprising:
a read-only optical storage portion; and
a magnetic storage portion that can be magnetically written and read.

2. The information storage medium of claim 1, wherein said magnetic storage portion is formed on both sides or one side of an optical storage disk having said optical storage portion.

3. The information storage medium of claim 2, wherein said optical storage portion has a region for storing certain data indicating that said magnetic storage portion is present.

4. The information storage medium of claim 2 or 3, wherein said magnetic storage portion is formed on a surface opposite to a surface on which light for reading said optical storage portion impinges.

5. The information storage medium of any one of claims 2-4, wherein said information storage medium has a body having both said magnetic storage portion and said optical storage portion and enclosed in an outer case that is provided with openings for permitting a magnetic head and an optical head to have access to said magnetic storage portion and said optical storage portion, respectively, and wherein said openings are spaced from each other circumferentially of said body of the medium.

6. The information storage medium of claim 1, comprising a first disk forming said optical storage portion and a second disk forming said magnetic storage portion, and wherein one of said first and second disks is accommodated in a first case provided with an opening permitting heads to have access to the disks, while the other disk is located at a side of a shutter that opens and closes said opening.

7. The information storage medium of claim 6, wherein said other disk is accommodated in said second case located at a side of said shutter, and wherein said second case is provided with an opening permitting the heads to have access to the disks.

8. The information storage medium of claim 7, wherein said opening formed in said second case and said opening formed in said first case extend in different directions.

9. The information storage medium of any one of claims 6-8, wherein said first case is provided with an opening which is formed by moving said shutter and used for replacement of the disks.

10. A drive unit for writing and reading information to and from an information storage medium as set forth in any one of claims 2-4, said drive unit comprising an optical information reading control means for controlling a rotational speed of said information storage medium according to information stored in said optical storage portion when information should be read from said optical storage portion, said drive unit also acting to write and read information to and from said magnetic storage portion.

11. The drive unit of claim 10, further comprising:
a decision means for making a decision as to whether a loaded information storage medium has said magnetic storage portion; and
a control means for preventing a magnetic head from coming into contact with the medium when results of said decision indicate that the medium does not have said magnetic storage portion.

12. The drive unit of claim 11, wherein said decision means makes a decision as to whether the loaded information storage medium has said magnetic storage portion, based on information read from a region of said optical storage portion of said medium, said region storing certain data indicating that said optical storage portion has said magnetic storage portion.

13. The drive unit of claim 11, wherein said decision means makes a decision as to whether the loaded information storage medium has said magnetic storage portion by detecting presence or absence of a certain concave portion, convex portion, or hole formed in a case accommodating said information storage medium.

14. The drive unit of claim 10, wherein a magnetic head for writing and reading information to and from said magnetic storage portion and an optical head for reading information from said optical storage portion are disposed on opposite sides of a loaded information storage medium, and wherein said magnetic head is kept apart from the medium when the magnetic head is not accessed and said magnetic head is brought into contact with the medium only when the magnetic head is accessed.

15. The drive unit of claim 10, further comprising a magnetic head support mechanism for raising a magnetic head while interlocking with a cover which moves when said information storage medium is loaded.

16. The drive unit of claim 10, wherein a magnetic head has a fixed point mounted to a securing member, and wherein a mechanism for moving an optical head is fixedly mounted to said securing member.

17. The drive unit of claim 10, wherein a magnetic head for writing and reading information to and from said magnetic storage portion and an optical head for reading information from said optical storage portion are spaced from each other circumferentially of said information storage medium.

18. A drive unit for writing and reading information to and from an information storage medium as set forth in any one of claims 6-9, said drive unit comprising:
an optical reader unit for reading information from said first disk;
a magnetic drive unit for writing and reading information to and from said second disk; and
a disk separation-and-loading means for separating said first disk and said second disk from said information storage medium, loading said first disk into said optical reader unit, and loading said second disk into said magnetic drive unit.

19. The drive unit of claim 18, wherein there are further provided means for placing said first disk and said second disk in position along planes of the disks and means for placing the disks in position in directions of their thicknesses after the disks are separated.

20. The drive unit of claim 18, wherein said optical reader unit and said magnetic drive unit are disposed adjacent to each other, and wherein axes of rotation of spindle motors of these units extend parallel to each other in the same direction.

21. The drive unit of claim 18, wherein said optical reader unit and said magnetic drive unit are disposed adjacent to each other, and wherein these units are mounted on a chassis.

22. The drive unit of claim 21, wherein said chassis has shock-absorbing means for protecting said optical reader unit and said magnetic drive unit.

23. The drive unit of any one of claims 14-22, wherein connecting means for flexibly connecting said information storage medium with disk drive means are mounted between the medium and the disk drive means.

24. The drive unit of claim 23, wherein said connecting means has means for placing said information storage medium in position along a plane of the medium and means for placing said information storage medium in position in a direction of its thickness by making use of magnetic attraction.

25. A method of fabricating an information storage medium as set forth in any one of claims 2-4, said method comprising the steps of:
applying a magnetic powder to a surface of a plastic film together with a binder to form an information storage medium film of a given form; and
bonding said optical storage disk to a rear surface of said information storage medium film via an adhesive to form said magnetic storage portion.

26. A method of fabricating an information storage medium as set forth in any one of claims 2-4, said method comprising the steps of:
applying a magnetic powder to a surface of a plastic film together with a binder to form an information storage medium film of a given form; and
bonding said optical storage disk to a rear surface of said information storage medium film via an adhesive sheet having an adhesive applied to its both sides to form said magnetic storage portion.

27. A method of fabricating an information storage medium as set forth in any one of claims 2-4, said method comprising the steps of:
applying a magnetic powder to a front surface of said optical storage disk together with a binder by spin coating; and
then drying and fixing said binder to form said magnetic storage portion.

28. A method of fabricating an information storage medium as set forth in any one of claims 2-4, said method comprising the steps of:
preparing a protective resin by dispersing a magnetic material in a resin which hardens when exposed to light;
applying said protective resin to a front surface of a reflecting film on said optical storage disk by spin coating to protect said reflecting film; and
illuminating said protective resin with light to harden the resin, for forming said magnetic storage portion.

29. The method of any one of claims 25-28, wherein a title of said optical storage portion is printed before said step of forming said magnetic storage portion is carried out.
